# FASCICULE DE BREVET EUROPEEN

(11) **EP 4 409 269 B1**
(45) Date de publication et mention de la délivrance du brevet: **19.11.2025**
(21) Numéro de dépôt: 22793195.3
(22) Date de dépôt: 29.09.2022
(51) Int. Cl.: G01N 21/88, G01N 21/90

(54) **PROCEDE ET DISPOSITIF D'INSPECTION POUR DES RECIPIENTS DEPLACES SELON UNE TRAJECTOIRE RECTILIGNE**
VERFAHREN UND VORRICHTUNG ZUR INSPEKTION VON LINEAR BEWEGTEN BEHÄLTERN
METHOD AND DEVICE FOR INSPECTING CONTAINERS MOVED ON A RECTILINEAR PATH

(30) Priorité: 30.09.2021 FR 2110358
(43) Date de publication de la demande: 07.08.2024
(73) Titulaire: TIAMA, 69230 Saint-Genis-Laval (FR)
(72) Inventeur: GARIN, Jean-François, 69560 Saint-Romain-en-Gal (FR); LECONTE, Marc, 69700 Loire-sur-Rhône (FR); SOLANE, Pierre-Yves, 69004 Lyon (FR)
(74) Mandataire: Cabinet Beau de Loménie
(86) Numéro de dépôt international: PCT/FR2022/051842
(87) Numéro de publication internationale: WO 2023/052732

(56) Documents cités:
- EP-A2- 3 088 873
- WO-A1-2012/010231
- DE-U1- 29 901 727

## Description

### Domaine Technique

La présente invention concerne le domaine technique de l'inspection en ligne de récipients transparents ou translucides tels que par exemple, des bouteilles ou des flacons en verre, pour déterminer des caractéristiques présentées par de tels récipients en vue de leur contrôle qualité.

L'objet de l'invention trouve des applications particulièrement avantageuses mais non exclusivement pour contrôler ou évaluer des caractéristiques dimensionnelles des récipients et/ou pour observer ou analyser des singularités optiques portées en surface ou dans la paroi d'un récipient, telles que des défauts absorbant et/ou réfractant et/ou réfléchissant la lumière affectant la qualité de tels récipients.

### Technique antérieure

Dans l'état de la technique, il est connu d'inspecter de manière automatique et sur la ligne de production, des récipients défilant à haute cadence devant un poste de contrôle optique comportant un système de vision comprenant une source de lumière située d'un côté du récipient et au moins une caméra située de l'autre côté du récipient. La caméra réalise grâce à la lumière traversant les récipients, des images des récipients qui sont analysées en vue de déterminer des caractéristiques dimensionnelles des récipients ou de détecter la présence de défauts dans les récipients.

Par exemple, le brevet FR 2 775 079 décrit une machine pour inspecter les parois et les profils de récipients transportés en ligne par un convoyeur. Cette machine comporte un premier poste d'inspection réalisant au moyen d'une caméra et de miroirs, deux vues à 60° d'angle, autrement dit deux images des récipients selon deux directions d'observation présentant entre elles un angle de 60°. Cette machine comporte également un second poste d'inspection symétrique du premier poste par rapport au convoyeur, et comportant une première caméra réalisant une inspection de la paroi sur deux vues d'angle à 60° et une deuxième caméra superposée réalisant une inspection du profil des récipients selon deux vues à 60°. Il est possible qu'au deuxième poste une seule camera réalise successivement les vues pour l'inspection des parois et pour l'analyse de profils.

A chaque vue est associée une source de lumière commandée comportant des rangées verticales de diodes électroluminescentes. Un diffuseur sensiblement incurvé ou enroulé intercepte la lumière provenant des deux sources de lumière de chaque poste d'inspection, diffusant ainsi la lumière et éliminant sensiblement l'espace sombre entre les deux sources de lumière.

Ce brevet enseigne de détecter les défauts dimensionnels par l'analyse des profils en mesurant deux diamètres selon deux directions d'observation à 60°. Or, la section plane d'un récipient n'étant pas circulaire, ces deux mesures ne permettent pas de garantir un bon contrôle dimensionnel des récipients.

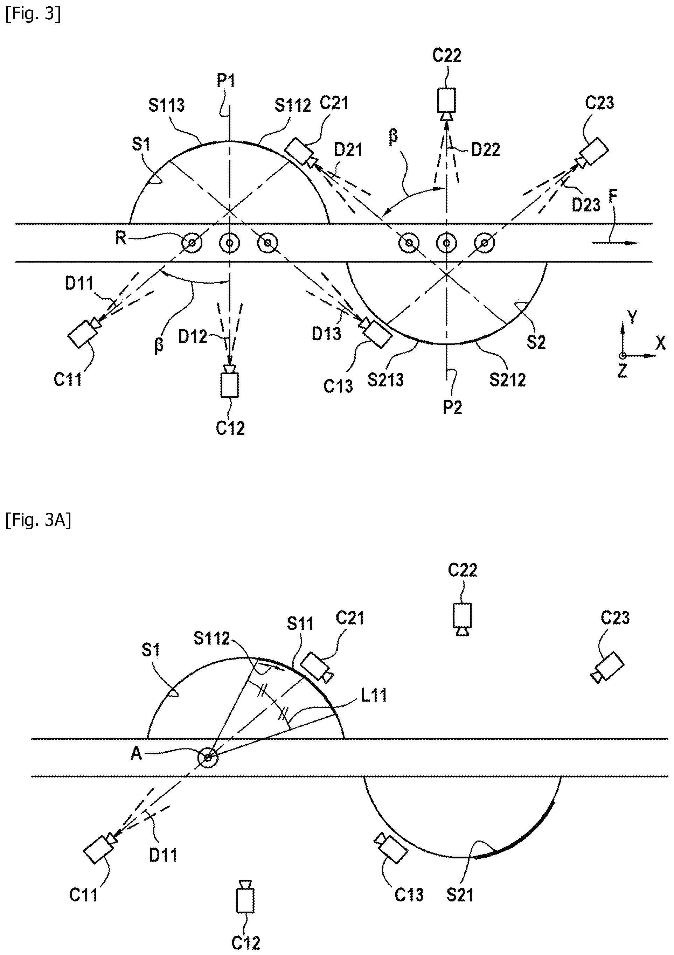

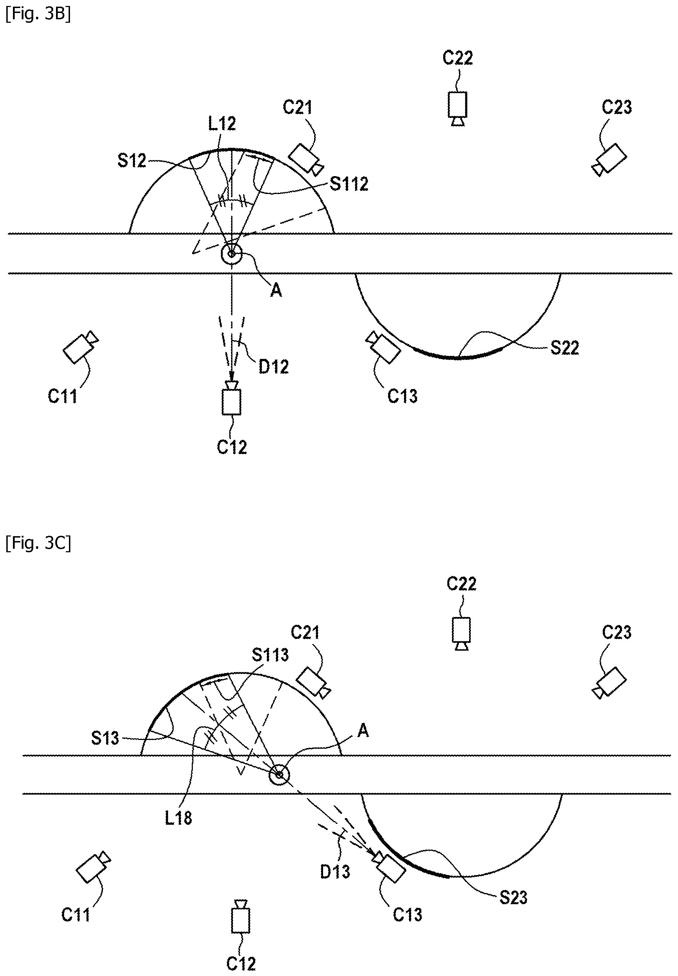

Pour le contrôle d'aspect, le côté du récipient situé à proximité d'un bord des panneaux des sources de lumière apparaît sombre comme cela apparaît à la figure 3. Il s'ensuit que les deux côtés du récipient ne sont pas vus de la même façon. Or, les ombres sont des régions dans lesquelles la détection des défauts comme des bulles ou des inclusions est difficile voire impossible à réaliser. Autrement dit, la sensibilité de détection dépend de l'orientation du récipient durant son passage dans les postes d'inspection. Un défaut sera vu différemment ou même pas vu du tout selon qu'il se trouve dans le récipient proche de la paroi qui est à proximité du bord du panneau de la source, ou proche de la paroi qui est à proximité de la jonction entre les deux sources de sorte que cette solution ne permet pas de remplir les exigences de qualité d'inspection.

Par ailleurs, ce brevet enseigne de réaliser le contrôle des profils des récipients avec des zones éclairées étroites pour obtenir des ombres très marquées sur les vues.

La demande de brevet EP3088873 décrit un dispositif d'inspection optique de récipients déplacés par un convoyeur comportant selon une variante illustrée sur les dessins, un premier poste d'inspection équipé d'un côté du convoyeur, de trois panneaux de sources lumineuses décalés angulairement et de l'autre côté du convoyeur, de trois caméras dont les directions d'observation sont respectivement centrées sur les trois panneaux de sources lumineuses. Le dispositif d'inspection comporte un deuxième poste d'inspection qui est symétrique du premier poste d'inspection par rapport au convoyeur. Les trois panneaux des sources lumineuses peuvent être considérés comme un seul panneau.

Il est à noter que certains panneaux peuvent être de nature plane mais un panneau n'est pas nécessairement plan mais peut être incurvé ou formé à partir d'une pluralité de segments orientés les uns par rapport aux autres dans une configuration non plane.

Le panneau comprend une pluralité de sources lumineuses configurées pour éclairer le récipient. Les sources lumineuses sont commandées individuellement pour ajuster individuellement l'intensité de chacune des sources lumineuses. Ainsi, la caméra peut capturer une image uniforme sans ajuster le placement ou la configuration des sources lumineuses par rapport à la caméra.

Toutefois, ce dispositif présente le même inconvénient en ce qui concerne le fait que les deux côtés du récipient sont susceptibles de ne pas être vus de la même façon. Un défaut sera vu différemment ou même pas vu du tout selon qu'il se trouve dans le récipient proche de la paroi qui est à proximité du bord de la source, ou proche de la paroi qui est à proximité de la jonction entre deux panneaux de la source. Par ailleurs, cette demande de brevet indique la possibilité d'augmenter le nombre de caméras et de panneaux de la source pour augmenter le nombre de vues des récipients. Toutefois, il s'ensuit une augmentation de l'encombrement d'un tel dispositif qui rend pratiquement rédhibitoire son implantation sur une ligne de fabrication de récipients. Selon cette configuration, le nombre de panneaux fixe le nombre de vues possibles. Concernant un contrôle dimensionnel, selon l'exemple avec trois panneaux dans chaque poste d'inspection, seulement trois diamètres sont mesurés au moyen des vues symétriquement opposées par rapport au convoyeur.

### Exposé de l'invention

L'objet de la présente invention vise donc à remédier aux inconvénients de l'art antérieur en proposant un procédé d'inspection pour des récipients déplacés selon une trajectoire rectiligne, conçu pour garantir une qualité d'inspection des récipients tout en limitant l'encombrement du dispositif mettant en œuvre une telle technique d'inspection.

Un autre objet de l'invention est de proposer un procédé d'inspection pour des récipients déplacés selon une trajectoire rectiligne, conçu pour obtenir un même rendu d'image quel que soit l'angle de prise de vue autour du récipient.

Pour atteindre de tels objectifs, le procédé selon l'invention concerne un procédé d'inspection pour des récipients déplacés selon un plan de convoyage avec une trajectoire rectiligne, le procédé consistant dans un premier poste d'inspection :
- à mettre à disposition une première source de lumière éclairant les récipients selon un premier côté de la trajectoire, comportant une surface émettrice présentant un plan de symétrie perpendiculaire à la trajectoire et s'étendant d'une part, en hauteur selon une direction verticale normale au plan de convoyage et d'autre part, sur une largeur angulaire totale , suivant une courbe concave, la surface émettrice étant composée d'une pluralité de sources lumineuses élémentaires commandées de manière à définir au moins trois zones d'éclairage présentant au moins une première configuration d'éclairage identique ;
- à mettre à disposition au moins trois capteurs d'images avec des champs totaux d'observation et disposés avec des axes optiques de directions différentes selon un deuxième côté de la trajectoire opposé au premier côté, pour présenter chacun , lors d'une acquisition d'image d'un récipient présent dans son champ total d'observation, une direction d'observation passant par le centre optique et l'axe central du récipient, les directions d'observation pour les au moins trois capteurs d'images étant des droites différentes et adaptées pour récupérer la lumière issue d'une zone d'éclairage associée ;
- et lorsqu'un récipient en déplacement se trouve successivement sensiblement centré sur une direction d'observation de chacun des capteurs d'images, à acquérir par chacun desdits capteurs d'images, au moins une image du récipient illuminé par la zone d'éclairage associée commandée en allumage successivement pendant l'acquisition, présentant au moins la première configuration d'éclairage, les sources lumineuses élémentaires des zones d'éclairage étant commandées de manière que :
   * les au moins trois zones d'éclairage associées aux capteurs d'images présentent des largeurs angulaires identiques ;
   * les au moins trois zones d'éclairage associées aux capteurs d'images s'étendent avec une largeur angulaire symétrique par rapport à la direction d'observation correspondante ;
   * et au moins deux zones d'éclairage angulairement voisines, possèdent une partie commune d'éclairage en considérant que les deux dites zones d'éclairage ne sont pas éclairées simultanément.

Selon une variante préférée de mise en œuvre, dans un deuxième poste d'inspection situé en aval du premier poste d'inspection selon le sens de déplacement des récipients, le procédé consiste :
- à mettre à disposition une deuxième source de lumière éclairant les récipients selon le deuxième côté de la trajectoire, comportant une surface émettrice présentant un plan de symétrie perpendiculaire à la trajectoire et s'étendant d'une part, en hauteur selon une direction verticale normale au plan de convoyage et d'autre part, sur une largeur angulaire totale , suivant une courbe concave, la surface émettrice étant composée d'une pluralité de sources lumineuses élémentaires commandées de manière à définir au moins trois zones d'éclairage présentant au moins une première configuration d'éclairage identique ;
- à mettre à disposition au moins trois capteurs d'images avec des champs totaux d'observation et disposés avec des axes optiques de directions différentes selon le premier côté de la trajectoire, pour présenter chacun, lors d'une acquisition d'image d'un récipient présent dans son champ total d'observation, une direction d'observation passant par le centre optique et l'axe central du récipient, les directions d'observation pour les au moins trois capteurs d'images étant des droites différentes et adaptées pour récupérer la lumière issue d'une zone d'éclairage associée ;
- et lorsqu'un récipient en déplacement se trouve successivement sensiblement centré sur une direction d'observation de chacun des capteurs d'images, à acquérir par chacun desdits capteurs d'images, au moins une image du récipient illuminé par la zone d'éclairage associée commandée en allumage successivement pendant l'acquisition, présentant au moins la première configuration d'éclairage, les sources lumineuses élémentaires des zones d'éclairage étant commandées de manière que :
   * les au moins trois zones d'éclairage associées aux capteurs d'images présentent des largeurs angulaires identiques ;
   * les au moins trois zones d'éclairage associées aux capteurs d'images s'étendent avec une largeur angulaire symétrique par rapport à la direction d'observation correspondante ;
   * et au moins deux zones d'éclairage angulairement voisines, possèdent une partie commune d'éclairage en considérant que les deux dites zones d'éclairage ne sont pas éclairées simultanément.

Selon une variante de réalisation, on met à disposition la première source de lumière et/ou la deuxième source de lumière avec une surface émettrice réalisée par une portion d'un cylindre généralisé engendré par une génératrice réalisée par un segment de droite verticale et une courbe directrice concave selon le plan de convoyage, dont la concavité est tournée vers les récipients.

Par exemple, on met à disposition la première source de lumière et/ou la deuxième source de lumière avec chacune une surface émettrice avec une largeur angulaire totale entre 100 et 175°.

De préférence, on met à disposition la première source de lumière et/ou la deuxième source de lumière avec chacune une surface émettrice dont la courbe directrice est un arc de cercle.

Selon une variante de réalisation, on met à disposition la première source de lumière et/ou la deuxième source de lumière avec une surface émettrice présentant selon le plan de convoyage, une largeur comprise entre 500 mm et 700 mm et une profondeur comprise entre 100 mm et 350 mm.

Typiquement, on met à disposition la première source de lumière et/ou la deuxième source de lumière avec une surface émettrice réalisée par un diffuseur en une seule pièce rétroéclairé.

Selon une variante de mise en œuvre, dans chaque poste d'inspection :
- on met à disposition pour la surface émettrice de chaque source de lumière, au moins trois zones d'éclairage présentant au moins la première configuration d'éclairage identique, une deuxième configuration d'éclairage identique et une troisième configuration d'éclairage identique ;
- et lorsqu'un récipient est sensiblement centré sur une direction d'observation d'un capteur d'images, à acquérir par chacun desdits capteurs d'images, successivement au moins une image du récipient illuminé par la zone d'éclairage associée, présentant la première configuration d'éclairage, au moins une image du récipient illuminé par la zone d'éclairage associée, présentant la deuxième configuration d'éclairage et au moins une image du récipient illuminé par la zone d'éclairage associée, présentant la troisième configuration d'éclairage.

Typiquement, dans chaque poste d'inspection, on met à disposition pour la surface émettrice de chaque source de lumière, au moins trois zones d'éclairage présentant :
- en tant que première configuration d'éclairage identique, une configuration étendue à motif homogène adapté;
- en tant que deuxième configuration d'éclairage identique, une configuration restreinte homogène;
- en tant que troisième configuration d'éclairage identique, une configuration structurée.

Selon un exemple de mise en œuvre, on met à disposition au moins trois capteurs d'images au premier poste d'inspection et au moins trois capteurs d'images au second poste d'inspection, lesdits au moins six capteurs d'images présentant au moins six directions d'observation écartées entre elles deux à deux d'au moins 10°.

Selon un autre exemple de mise en œuvre :
- dans le premier poste d'inspection, on met à disposition au moins trois capteurs d'images présentant des directions d'observation écartées entre elles deux à deux d'au moins 30 degrés d'angle et de préférence d'au moins 40° d'angle;
- dans le deuxième poste d'inspection, on met à disposition au moins trois capteurs d'images présentant des directions d'observation écartées entre elles deux à deux d'au moins 30 degrés d'angle et de préférence d'au moins 40° d'angle.

Par exemple, on modifie les directions d'observation des capteurs d'images en nombre et/ou en valeurs d'angle par rapport à la direction de déplacement en adaptant uniquement la commande de la première source de lumière et/ou de la deuxième source de lumière pour présenter au moins trois zones d'éclairage présentant au moins une première configuration d'éclairage.

Selon un autre exemple, on augmente le nombre de directions d'observation des capteurs d'images en ajoutant des capteurs d'images.

Avantageusement, au moins un capteur d'images acquiert au moins deux images de chaque récipient selon au moins deux directions d'observation différentes suite au déplacement du récipient dans le champ total d'observation du capteur d'images.

En tant qu'exemples d'applications, on réalise une analyse des images prises par les capteurs d'images avec une même configuration des zones d'éclairage pour en déduire des informations de défauts et/ou de dimensions des récipients.

Ainsi, par exemple:
- on réalise l'analyse des six images prises par les au moins six capteurs d'images à au moins une hauteur donnée dans les images parcourues du bas du récipient vers le haut, pour déterminer la distance entre deux bords opposés du récipient pour en déduire une mesure de diamètre du récipient à ladite hauteur,
- on détermine la conformité dimensionnelle du récipient à partir des mesures d'au moins six diamètres différents selon six directions différentes comparées à des seuils de tolérances de diamètre ou des seuils de non circularité pour au moins une hauteur donnée du récipient.

Selon une autre caractéristique avantageuse, le procédé consiste à mettre à disposition dans un poste d'inspection au moins trois capteurs d'images, ayant tous une distance de travail sensiblement identique au moment de l'acquisition des images selon une même configuration d'éclairage.

Selon une autre caractéristique avantageuse, le procédé consiste à mettre à disposition dans un premier poste d'inspection au moins trois capteurs d'images et dans un deuxième poste d'inspection au moins trois capteurs d'images, ayant tous une distance de travail sensiblement identique au moment de l'acquisition des images selon une même configuration d'éclairage.

Un autre objet de l'invention est de proposer un dispositif d'inspection pour des récipients déplacés selon un plan de convoyage avec une trajectoire rectiligne, ce dispositif d'inspection comportant :
* un premier poste d'inspection comportant :
   - une première source de lumière selon un premier côté de la trajectoire, comportant une surface émettrice présentant un plan de symétrie perpendiculaire à la trajectoire et s'étendant d'une part, en hauteur selon une direction verticale normale au plan de convoyage et d'autre part, sur une largeur angulaire totale suivant une courbe concave, la surface émettrice étant composée d'une pluralité de sources lumineuses élémentaires commandées de manière à définir au moins trois zones d'éclairage présentant au moins une première configuration d'éclairage identique ;
   - au moins trois capteurs d'images avec des champs totaux d'observation et disposés avec des axes optiques de directions différentes selon un deuxième côté de la trajectoire opposé au premier côté, pour présenter chacun, lors d'une acquisition d'image d'un récipient présent dans son champ total d'observation, une direction d'observation passant par le centre optique et l'axe centraldu récipient, les directions d'observation pour les capteurs d'images étant différentes et adaptées pour récupérer la lumière issue d'une zone d'éclairage associée ;
*un deuxième poste d'inspection situé en aval du premier poste d'inspection selon le sens de déplacement des récipients, ce deuxième poste d'inspection comportant :
   - une deuxième source de lumière selon le deuxième côté de la trajectoire, comportant une surface émettrice présentant un plan de symétrie perpendiculaire à la trajectoire et s'étendant d'une part, en hauteur selon une direction verticale normale au plan de convoyage et d'autre part, sur une largeur angulaire totale, suivant une courbe concave, la surface émettrice étant composée d'une pluralité de sources lumineuses élémentaires commandées de manière à définir au moins trois zones d'éclairage présentant au moins une première configuration d'éclairage identique ;
   - au moins trois capteurs d'images avec des champs totaux d'observation et disposés avec des axes optiques de directions différentes selon le premier côté de la trajectoire, pour présenter chacun, lors d'une acquisition d'image d'un récipient présent dans son champ total d'observation, une direction d'observation passant par le centre optique et l'axe central du récipient, les directions d'observation pour les capteurs d'images étant adaptées pour récupérer la lumière issue d'une zone d'éclairage associée, les directions d'observation pour les capteurs d'images du deuxième poste d'inspection étant des droites différentes entre elles et différentes des directions d'observation des capteurs d'images du premier poste d'inspection;
* et un système de commande des sources de lumière et des capteurs d'images, configuré pour, lorsqu'un récipient en déplacement se trouve successivement sensiblement centré sur une direction d'observation, de chacun des capteurs d'images, à acquérir par chacun desdits capteurs d'images, au moins une image du récipient illuminé par la zone d'éclairage associée commandée en allumage successivement pendant l'acquisition, présentant au moins la première configuration d'éclairage, les sources lumineuses élémentaires des zones d'éclairage étant commandées de manière que :
   - les au moins trois zones d'éclairage de chaque poste d'inspection associées aux capteurs d'images présentent des largeurs angulaires identiques ;
   - les au moins trois zones d'éclairage de chaque poste d'inspection associées aux capteurs d'images s'étendent avec une largeur angulaire symétrique par rapport à la direction d'observation correspondante ;
   - et au moins deux zones d'éclairage angulairement voisines de chaque poste d'inspection, possèdent une partie commune d'éclairage en considérant que les deux dites zones d'éclairage ne sont pas éclairées simultanément.

Selon une caractéristique de réalisation, les au moins trois capteurs d'images, de chaque poste d'inspection présentent des directions d'observation qui sont des droites écartées entre elles deux à deux d'au moins 30° d'angle et de préférence d'au moins 40° d'angle.

Avantageusement, les au moins trois capteurs d'images du premier poste et les au moins trois capteurs d'images du second poste présentent au moins six directions d'observation écartées entre elles deux à deux d'au moins 10°.

Typiquement, la première source de lumière et/ou la deuxième source de lumière possède une surface émettrice présentant selon le plan de convoyage, une largeur comprise entre 500 mm et 700 mm et une profondeur comprise entre 100 mm et 350 mm.

De plus, la première source de lumière et la deuxième source de lumière sont positionnées avantageusement de manière que les surfaces émettrices des sources de lumière possèdent un encombrement compris entre 1000 mm et 1400 mm.

Selon un exemple préféré de mise en œuvre, la surface émettrice de la première source de lumière et/ou de la deuxième source de lumière est réalisée par un diffuseur en une seule pièce rétro éclairée.

Selon une caractéristique avantageuse de réalisation, au moins trois capteurs d'images, dans un poste d'inspection comporte tous une distance de travail sensiblement identique prise le long de l'axe optique entre leur centre optique et la trajectoire des récipients.

Selon une autre caractéristique avantageuse de réalisation, au moins trois capteurs d'images dans un premier poste d'inspection et au moins trois capteurs d'images, dans un deuxième poste d'inspection possèdent tous une distance de travail sensiblement identique prise le long de l'axe optique entre leur centre optique et la trajectoire des récipients.

### Brève description des dessins

[Fig. 1] La Figure 1 est une vue schématique en perspective montrant un exemple de réalisation d'un dispositif d'inspection de récipients déplacés en translation.
[Fig. 2] La figure 2 est une vue schématique de dessus montrant un exemple de réalisation d'un dispositif d'inspection selon l'invention.
[Fig. 3] La figure 3 est une vue schématique montrant dans le plan horizontal, les zones d'éclairage des surfaces émettrices et les champs d'observation des capteurs d'images du dispositif d'inspection selon l'invention.
[Fig. 3A] La figure 3A est une vue schématique montrant dans le plan horizontal, une première zone d'éclairage de la surface émettrice du premier poste d'inspection et le champ d'observation d'un premier capteur d'images rencontré lors du déplacement d'un récipient.
[Fig. 3B] La figure 3B est une vue schématique montrant dans le plan horizontal, une deuxième zone d'éclairage de la surface émettrice du premier poste d'inspection et le champ d'observation d'un deuxième capteur d'images rencontré lors du déplacement d'un récipient.
[Fig. 3C] La figure 3C est une vue schématique montrant dans le plan horizontal, une troisième zone d'éclairage de la surface émettrice du premier poste d'inspection et le champ d'observation d'un troisième capteur d'images rencontré lors du déplacement d'un récipient.
[Fig. 4A] La figure 4A est un schéma représentant schématiquement l'éclairage produit lorsqu'un diffuseur massique est partagé en deux corps distincts.
[Fig. 4B] La figure 4B est un schéma représentant schématiquement l'éclairage produit lorsqu'un diffuseur massique est constitué d'un diffuseur continu.
[Fig. 4C] La figure 4C est un schéma représentant schématiquement l'éclairage produit lorsqu'un diffuseur surfacique est partagé en deux corps distincts.
[Fig. 4D] La figure 4D est un schéma représentant schématiquement l'éclairage produit lorsqu'un diffuseur surfacique est constitué d'un diffuseur continu.
[Fig. 5A] La figure 5A montre deux vues de récipients pris par deux caméras voisines conformément à l'invention.
[Fig. 5B] La figure 5B montre deux vues de récipients pris par deux caméras voisines avec une source lumineuse plane parallèle à la trajectoire des récipients ou avec un bord de source lumineuse proche du côté droit du récipient.
[Fig. 6A] La figure 6A est une vue schématique montrant dans le plan horizontal, la position de six capteurs d'images disposés symétriquement selon les deux postes d'inspection et de part et d'autre de la trajectoire des récipients.
[Fig. 6B] La figure 6B est une vue schématique montrant dans le plan horizontal, la position des trois diamètres différents d'un récipient vus par les six capteurs d'images illustrés à la figure 6A.
[Fig. 7A] La figure 7A est une vue schématique montrant dans le plan horizontal, la position de six capteurs d'images disposés de manière non symétrique selon les deux postes d'inspection de part et d'autre de la trajectoire des récipients.
[Fig. 7B] La figure 7B est une vue schématique montrant dans le plan horizontal, la position des six diamètres différents d'un récipient vus par les six capteurs d'images illustrés à la figure 7A.
[Fig. 8A] La figure 8A est une vue schématique montrant dans le plan horizontal, la position de sept capteurs d'images disposés de manière non symétrique selon les deux postes d'inspection de part et d'autre de la trajectoire des récipients.
[Fig. 8B] La figure 8B est une vue schématique montrant dans le plan horizontal, la position des sept diamètres différents d'un récipient vus par les sept capteurs d'images illustrés à la figure 8A.
[Fig. 9A] La figure 9A est une vue schématique montrant dans le plan horizontal, une configuration d'éclairage dite restreinte homogène, pour une zone d'éclairage associée à un capteur d'images.
[Fig. 9B] La figure 9B est une vue schématique montrant dans le plan horizontal, une configuration d'éclairage dite étendue homogène adaptée, pour une zone d'éclairage associée à un capteur d'images.
[Fig. 9C] La figure 9C est une vue schématique montrant dans le plan horizontal, une configuration d'éclairage dite structurée, pour une zone d'éclairage associée à un capteur d'images.
[Fig. 10] La figure 10 est une vue schématique montrant dans le plan horizontal, une configuration en ellipse de la surface émettrice d'une source de lumière.
[Fig. 11] La figure 11 est une vue schématique montrant dans le plan horizontal, les angles γ des rayons lumineux issus du récipient par rapport à la direction d'observation d'un capteur d'images.

### Description des modes de réalisation

Tel que cela ressort des Figures notamment 1 et 2, l'objet de l'invention concerne un dispositif I et un procédé pour inspecter en ligne des récipients 1 en matériau transparent ou translucide tels que par exemple des récipients en verre en particulier vides. Ces récipients sont inspectés à l'aide de capteurs d'images récupérant la lumière ayant notamment traversé les récipients et provenant de sources de lumière. Les images prises par les capteurs d'images analogiques ou numériques, sont analysées en vue d'assurer un contrôle qualité pour en particulier, contrôler ou évaluer des caractéristiques dimensionnelles des récipients et/ou pour observer ou analyser des singularités optiques portées en surface ou dans la paroi d'un récipient. Les images numériques sont analysées par une unité de calcul informatique de toute architecture possible, composée de processeurs (CPU, GPU et/ou FPGA) et mémoires, répartis sur plusieurs calculateurs, de moyens de saisie, d'affichage, de communication. Par singularités optiques sont désignées des portions restreintes d'un récipient ou de sa surface ayant des propriétés différentes de celles de leur voisinage sur ou dans le récipient. Des singularités optiques désignent donc des portions d'un récipient ayant des propriétés optiques différentes de celles de leur voisinage sur ou dans le récipient. En l'occurrence, ces singularités optiques ont principalement un effet anormal de transmission, de réfraction, de modification de l'état de polarisation et / ou de réflexion par rapport à leur voisinage. Les défauts réfractant et / ou réfléchissant, les codes ou encore les décors de type blason marqués en surface des récipients sont donc des singularités optiques qui dévient la lumière de manière différente par rapport à leur voisinage soit en transmission (dioptres) soit en réflexion. Les salissures ou certains corps étrangers ou des régions d'épaisseurs anormales sont donc des singularités optiques qui absorbent la lumière de manière différente par rapport à leur voisinage. Certains corps étrangers créant du stress, sont donc des singularités optiques qui modifient l'état de polarisation de la lumière de manière différente par rapport à leur voisinage. L'objet de l'invention permet ainsi en particulier de détecter d'éventuels défauts absorbant et/ou réfractant et/ou réfléchissant la lumière affectant la qualité de tels récipients.

Le dispositif I comporte au moins un premier poste d'inspection I1 dans lequel les récipients 1 sont amenés à défiler selon un sens de déplacement F, à l'aide d'un système de transport II de tous types connus en soi. Selon une variante de réalisation illustrée, le dispositif I comporte aussi un deuxième poste d'inspection I2 situé en aval du premier poste d'inspection I1 selon le sens de déplacement F des récipients. Bien entendu, le dispositif I peut comporter un unique poste d'inspection.

De manière générale, un récipient 1 présente un axe central A, considéré comme un axe de symétrie, voire un axe de symétrie de révolution. Ainsi, un récipient 1 présente une paroi de verre formant de bas en haut le long de l'axe central A, un fond raccordé à un talon à partir duquel s'élève un corps se prolongeant par une épaule raccordée à un goulot ou col terminé par une bague délimitant l'embouchure permettant de remplir ou de vider le récipient.

L'axe central A est considéré comme un axe de symétrie pour les récipients de section ronde, en considérant une répartition de verre parfaite uniforme et idéale par rapport au plan de conception du récipient. Evidemment, les récipients réels ne sont pas strictement symétriques. La répartition du verre est quelque peu hétérogène. Certains récipients portent des décors en relief ou des filets de bague, etc. Enfin de nombreux modèles de récipients dits « articles de forme » ont un corps de section non ronde. Dans la plupart des cas, même pour les articles de forme, l'axe central A correspond à un axe orthogonal au plan définissant le fond du récipient et parallèle à un plan de convoyage Pc des récipients.

Dans au moins chacun des postes d'inspection du dispositif I, les récipients 1 sont transportés dans un plan de convoyage Pc horizontal à l'aide du système de transport II de tous types connus en soi. Il est à noter que sur les lignes de fabrication selon l'exemple illustré, en amont et en aval des différents postes d'inspection I1, I2, les récipients 1 sont transportés par leur fond reposant sur des convoyeurs à palettes ou à chaîne. La surface de la chaîne définit le plan de convoyage généralement horizontal. Les récipients sont parfois amenés dans les postes d'inspection I1, I2 par des convoyeurs dits d'entrée puis redéposés après inspection, sur un convoyeur dit de sortie, les convoyeurs d'entrée et de sortie ayant généralement le même plan de convoyage. Ce plan de convoyage est très généralement horizontal, et durant le convoyage, l'axe central des récipients reposant sur leur fond reste vertical. Le système de transport II est de tous types connus en soit pourvu que les récipients soient amenés à circuler entre une source de lumière et un capteur d'images et qu'une portion de la paroi à inspecter soit dégagée pour permettre le parcours de la lumière depuis la source de lumière, vers le récipient et puis en direction des capteurs d'images.

Dans la présente demande, la direction de déplacement F des récipients 1 s'établit selon une trajectoire rectiligne d'axe horizontal X d'un repère orthonormé direct X, Y, Z comportant un axe vertical Z perpendiculaire à l'axe horizontal X et un axe transversal Y perpendiculaire à l'axe vertical Z et à l'axe horizontal X, et les axes X et Y étant dans un plan parallèle à un plan de convoyage Pc des récipients qui est horizontal. Les récipients 1 sont ainsi entraînés uniquement selon une translation rectiligne, sans un mouvement de rotation autour d'eux-mêmes.

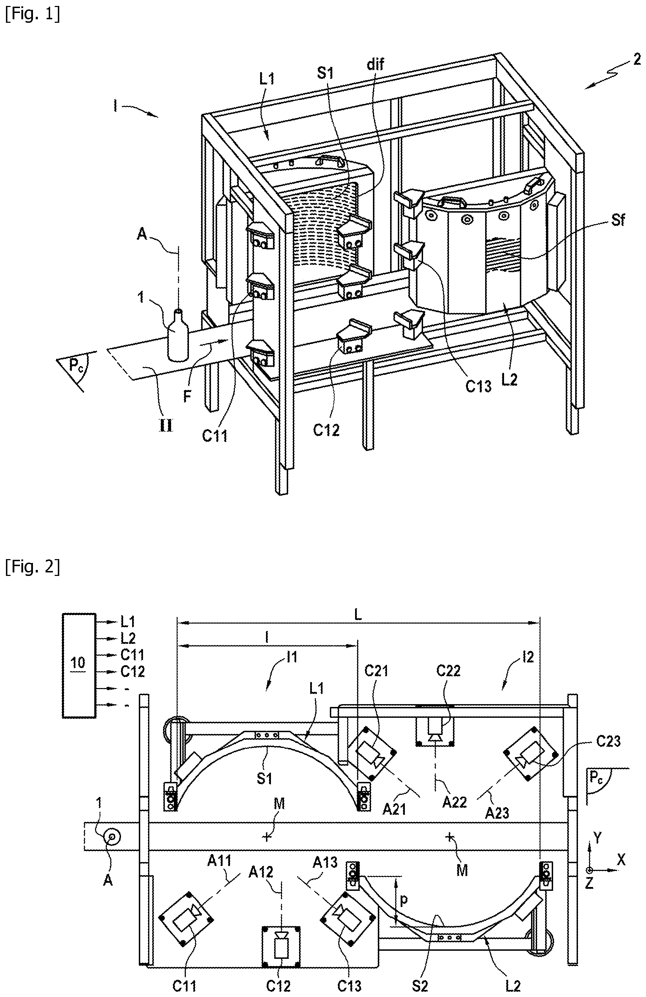

Conformément à l'invention, le premier poste d'inspection I1 comporte une première source de lumière L1 disposée selon un premier côté de la trajectoire d'axe X des récipients, comme cela apparait sur les figures 2 et 3. Cette première source de lumière L1 comporte une surface émettrice S1 présentant un plan de symétrie P1 perpendiculaire à la trajectoire d'axe X des récipients. Cette surface émettrice S1 s'étend en hauteur selon une direction verticale d'axe Z normale au plan de convoyage Pc. Cette surface émettrice S1 s'étend également sur une largeur angulaire totale selon un plan d'axe X, Y parallèle au plan de convoyage Pc, suivant une courbe concave dont la concavité est tournée vers le système de transport II. Cette largeur angulaire totale est mesurée dans le plan de convoyage en un point M situé sur la trajectoire de l'axe central A des récipients.

Selon l'exemple de réalisation illustré sur les dessins, le dispositif I comporte également un deuxième poste d'inspection I2 comportant une deuxième source de lumière L2 disposée selon le deuxième côté de la trajectoire d'axe X des récipients, c'est-à-dire selon le côté opposé de celui pourvu de la première source de lumière L1, comme cela apparait sur les figures 2 et 3. Cette deuxième source de lumière L2 comporte une surface émettrice S2 présentant un plan de symétrie P2 perpendiculaire à la trajectoire d'axe X des récipients. Cette surface émettrice S2 s'étend en hauteur selon une direction verticale d'axe Z normale au plan de convoyage Pc. Cette surface émettrice S2 s'étend également en largeur angulaire totale selon un plan d'axes X, Y parallèle au plan de convoyage Pc, suivant une courbe concave dont la concavité est tournée vers le système de transport II. Cette largeur angulaire totale est mesurée dans le plan de convoyage en un point M situé sur la trajectoire de l'axe central A des récipients.

Il doit être considéré que les surfaces émettrices S1 et S2 des première L1 et deuxième L2 sources de lumière peuvent présenter différentes formes. Il est à noter que les surfaces émettrices S1 et S2 des première L1 et deuxième L2 sources de lumière possèdent des formes identiques ou différentes. Selon une variante de réalisation, la première source de lumière L1 et/ou la deuxième source de lumière L2 présente une surface émettrice S1, S2 réalisée par une portion d'un cylindre généralisé engendré par une génératrice réalisée par un segment de droite verticale d'axe Z et une courbe directrice concave selon le plan de convoyage Pc, dont la concavité est tournée vers le système de transport II.

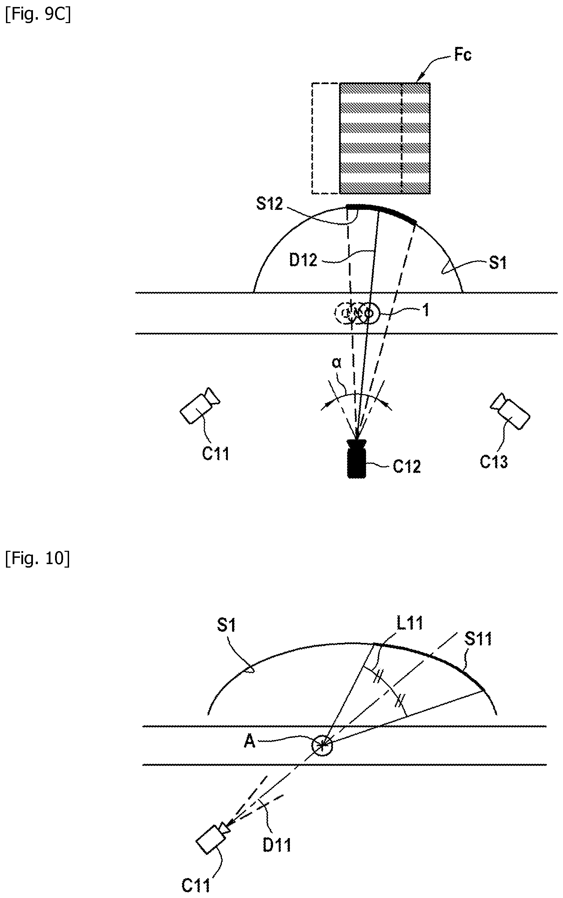

Typiquement, la surface émettrice S1, S2 est réalisée par une portion d'un cylindre avec une courbe directrice approchée par segments, les angles entre les segments connexes étant supérieurs à 160°, et/ou les segments étant reliés par des arêtes de rayon de courbure adaptée (par exemple supérieur à 5 mm) pour ne pas créer de variation horizontale de luminance sur la surface. On préférera à une courbe approchée par segments, comme courbe directrice, une courbe lisse, de préférence régulière. La surface émettrice S1, S2 de la première source de lumière et/ou de la deuxième source de lumière peut ainsi se présenter sous la forme d'une portion de cycloïde ou une portion d'ellipse, comme illustré à la figure 10. Selon une variante de réalisation, la courbe directrice de la surface émettrice de la première source de lumière et/ou de la deuxième source de lumière est un arc de cercle.

Avantageusement, la première source de lumière L1 et/ou la deuxième source de lumière L2 possède une surface émettrice S1, S2 avec une largeur angulaire totale comprise entre 100° et 175°, cette largeur angulaire totale étant prise dans le plan d'axes X, Y, en suivant la courbe de la surface émettrice, et mesurée dans le plan de convoyage en un point M situé sur la trajectoire de l'axe central A des récipients. Selon un exemple préféré de réalisation, la première source de lumière L1 et/ou la deuxième source de lumière L2 possède une surface émettrice S1, S2 dont la courbe directrice est un arc de cercle d'angle.

Selon une variante de réalisation, la première source de lumière L1 et/ou la deuxième source de lumière L2 possède une surface émettrice S1, S2 présentant selon le plan de convoyage Pc, une largeur l prise selon l'axe X comprise entre 500 mm et 700 mm et une profondeur p prise selon l'axe Y comprise entre 100 mm et 350 mm. De même, la première source de lumière L1 et/ou la deuxième source de lumière L2 possède une surface émettrice S1, S2 présentant par exemple, une hauteur prise selon l'axe Z comprise entre 20 mm et 800 mm. Avantageusement, la première source de lumière L1 et la deuxième source de lumière L2 sont positionnées de manière que les surfaces émettrices S1, S2 des sources de lumière possèdent un encombrement L pris selon l'axe X, compris entre 1000 mm et 1400 mm. Par exemple, les surfaces émettrices S1, S2 des sources de lumière sont positionnées de manière à être sensiblement contiguës selon la trajectoire d'axe horizontal X.

Selon une caractéristique de l'invention, chaque surface émettrice S1, S2 est composée d'une pluralité de sources lumineuses élémentaires commandées en allumage/extinction de manière à définir au moins trois zones d'éclairage respectivement S11, S12, S13 et S21, S22, S23, présentant au moins une première configuration d'éclairage identique. Il doit être compris qu'une source lumineuse élémentaire correspond à une portion élémentaire de la surface émettrice S1, S2. Ces sources lumineuses élémentaires peuvent être réalisées de toute manière appropriée. Par exemple, chaque source lumineuse élémentaire comporte une source élémentaire primaire Sf illuminant par rétro-éclairage un élément de surface lumineuse émettrice. Dans cet exemple de réalisation chaque source élémentaire primaire Sf est constituée par une diode électroluminescente présentant une jonction PN pour émettre un rayonnement lumineux dans une bande spectrale d'émission déterminée. Selon un autre exemple de réalisation, chaque source élémentaire primaire Sf est constituée par une diode électroluminescente présentant plusieurs jonctions PN ou pavés juxtaposés émettant des rayonnements lumineux dans des bandes spectrales d'émission différentes. Bien entendu, chaque pavé des diodes électroluminescentes est commandé électroniquement en allumage/extinction. Selon un autre exemple de réalisation, chaque source élémentaire primaire Sf comporte plusieurs diodes électroluminescentes commandées ensemble.

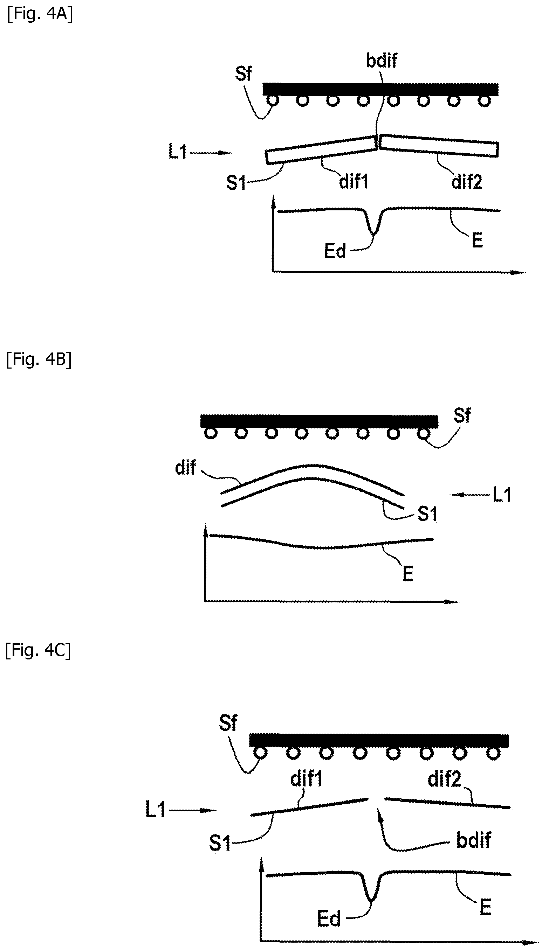

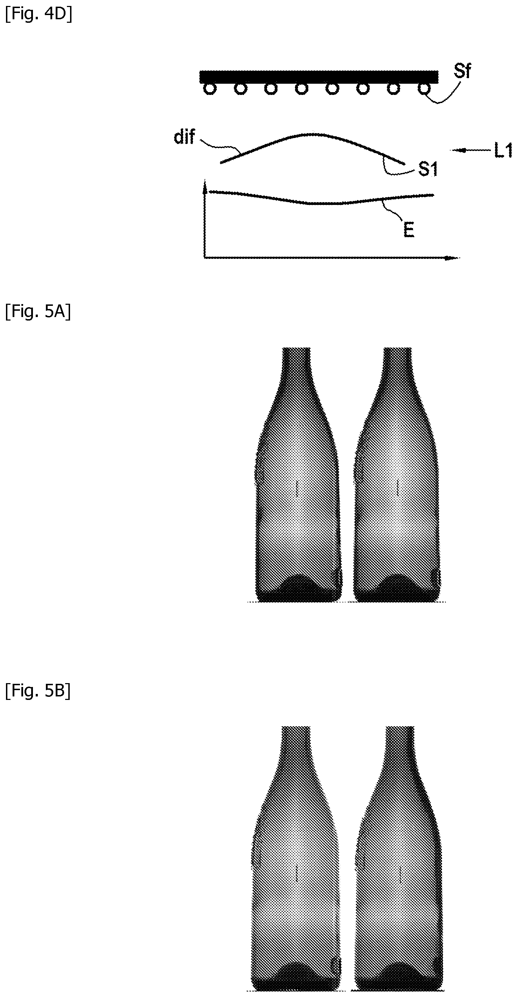

Selon une variante de réalisation préférée, la surface émettrice S1, S2 de la première source de lumière et/ou de la deuxième source de lumière est réalisée par un diffuseur dif en une seule pièce rétro éclairée. En d'autres termes, la surface émettrice S1, S2 est celle d'un diffuseur continu, massique ou surfacique, coloré ou non, et adapté pour transmettre le spectre visible et/ou proche infrarouge de la lumière. Un diffuseur massique dif est un diffuseur d'une certaine épaisseur, comme par exemple, une plaque de polyacrylate blanc et/ou translucide cintrée par thermoformage, la diffusion se faisant dans sa masse d'épaisseur par exemple de 2mm. Un diffuseur surfacique présentant au moins d'un côté un état de surface de granulosité particulière diffusant la lumière traversant cette surface, est réalisé par exemple au moyen d'une plaque de polyacrylate transparente dépolie ou moulée, ensuite cintrée par thermoformage pour prendre la courbure de la courbe directrice, ou bien au moyen d'un film mince et souple incurvé lors du montage. Il est possible de superposer plusieurs diffuseurs et de les combiner avec des filtres colorés ou polariseurs. De cette manière, la lumière E émise par une zone de la surface émettrice S1, S2 constituée par le diffuseur rétroéclairé par au moins deux sources élémentaires primaires Sf contiguës différentes est uniforme sans ombre, comme illustré sur la figure 4B pour un diffuseur dif massique et la figure 4D pour un diffuseur dif surfacique. A contrario, la figure 4A pour un diffuseur massique et la figure 4C pour un diffuseur surfacique montrent le cas où deux diffuseurs différents dif1, dif2 sont juxtaposés. Selon ces deux exemples, la diffusion étant interrompue par les bords bdif des deux diffuseurs dif1, dif2 la frontière présenterait une anomalie d'éclairage Ed visible sur les profils de lumière E perçue. De la continuité de matière ou de surface du diffuseur dif résulte donc une continuité d'éclairage sans rupture sur toute zone quelconque de la surface émettrice S1, S2. Par exemple, il est possible d'afficher un même motif d'éclairage n'importe où sur la surface émettrice S1, S2. Il est également possible de décaler de haut en bas et/ou de droite à gauche sur toute la surface émettrice S1 S2, successivement un motif d'éclairage d'un pas ou plus précisément d'un décalage élémentaire correspondant à la dimension des sources élémentaires, le motif restant constant sans ombre ou rupture.

Le diffuseur continu dif est disposé au-devant des sources élémentaires primaires Sf par rapport au système de transport II. Ainsi, la surface émettrice S1, S2 est celle d'un diffuseur rétro éclairé par les sources élémentaires primaires Sf portées par un ou plusieurs circuits imprimés. Par exemple, les sources élémentaires primaires Sf sont portées par un circuit imprimé souple conformé suivant la courbe directrice concave ou par au moins trois circuits imprimés plans formant un polyèdre comme dans l'exemple illustré (figure 1). De même, les sources lumineuses élémentaires sont des portions de la surface d'un diffuseur rétro éclairé par les diodes électroluminescentes portées par un ou plusieurs circuits imprimés et constituant l'ensemble des sources élémentaires primaires Sf.

Il est rappelé qu'au moyen de la commande électronique des sources élémentaires primaires Sf, les sources lumineuses élémentaires sont commandées indépendamment les unes des autres en allumage/extinction de manière à définir pour chaque poste d'inspection, au moins trois zones d'éclairage respectivement S11, S12, S13 et S21, S22, S23 présentant toutes au moins une première configuration d'éclairage identique. Une zone d'éclairage correspond à une région de la surface émettrice S1, S2 contenant un ensemble déterminé de sources lumineuses élémentaires commandées simultanément en allumage. Chaque zone d'éclairage est délimitée par un contour encadrant, s'étendant selon l'axe vertical Z et une courbe concave de largeur angulaire d'éclairage s'établissant dans le plan d'axes X, Y. Chaque zone d'éclairage S11, S12, S13, S21, S22, S23 possède donc une largeur angulaire d'éclairage respectivement L11, L12, L13, L21, L22, L23, prise selon le plan d'axes X, Y, l'angle étant mesuré par l'angle de deux droites concourantes sur l'axe A central du récipient et respectivement les deux bords latéraux de la zone d'éclairage, comme cela apparait sur les figures. La largeur angulaire d'éclairage est donc l'angle sous lequel est reçue la lumière par le récipient. La largeur angulaire d'une zone d'éclairage est la largeur angulaire d'un rectangle vertical-horizontal encadrant l'ensemble des sources lumineuses élémentaires éclairées ensemble d'une même zone d'éclairage. L'ensemble des sources lumineuses élémentaires éclairées ensemble d'une même zone d'éclairage peut donc avoir un contour non-rectangulaire, par exemple un contour longeant, avec une marge donnée, la silhouette d'un récipient pour une direction d'observation et un capteur d'images associé.

Une zone d'éclairage S11, S12, S13 et S21, S22, S23 présente un motif d'éclairement correspondant à la distribution spatiale des intensités lumineuses générées par les différentes sources lumineuses élémentaires appartenant à ladite zone d'éclairage. Il est également envisageable que d'autres propriétés de la lumière telles que la couleur, la polarisation ou une phase temporelle aient différentes distributions spatiales dans une zone d'éclairage. Le motif d'éclairage des zones d'éclairage est adapté au type de contrôle qualité à réaliser à savoir l'évaluation des caractéristiques dimensionnelles des récipients ou la détection de défauts absorbant, réfractant et/ou réfléchissant la lumière ou modifiant son état de polarisation et affectant la qualité de tels récipients.

Le motif d'éclairage des zones d'éclairage peut prendre des configurations diverses connues. Une première configuration d'éclairage est dite étendue à motif homogène adapté. Dans cette configuration d'éclairage, la zone éclairée est étendue par rapport à la silhouette du récipient, notamment la largeur angulaire d'éclairage est telle que du point de vue de la caméra la zone éclairée englobe largement la silhouette du récipient. La largeur angulaire d'éclairage peut être telle que les bords de la zone éclairée sont en dehors du champ utile de la caméra. Le motif homogène adapté est tel que la distribution spatiale des intensités lumineuses générées est homogène à l'intérieur d'un contour de la zone d'éclairage rectangulaire ou non. Cette distribution spatiale ne présente pas de variation brusque et est adaptée de manière que des régions génèrent une plus grande intensité de lumière que d'autres régions, pour traverser des régions des récipients plus absorbantes en verre teinté, comme par exemple des régions plus épaisses, comme le col. Cette configuration d'éclairage sans variation locale forte de l'intensité a pour but de fournir des images qui mettent en évidence facilement les défauts absorbants. Etant étendue, elle crée des ombres étroites aux parois, élargissant la région de détection et améliorant le recouvrement entre les différentes observations.

Une deuxième configuration d'éclairage est dite restreinte homogène. Dans cette deuxième configuration d'éclairage, la zone éclairée est restreinte en dimensions, donc sa largeur angulaire est étroite de manière à suivre de manière rapprochée la silhouette du récipient du point de vue de la caméra, son contour est rectangulaire ou non, et le motif tel que la distribution spatiale des intensités lumineuses générées est homogène autour de la silhouette du récipient sans variation brusque verticalement. L'adaptation à la transmission n'est pas nécessaire car le but de cette deuxième configuration d'éclairage est de fournir des images pour le contrôle dimensionnel basé sur la détection dans les images, des contours ou de la silhouette du récipient, sans s'intéresser à l'intérieur de la silhouette. Il est même possible que l'intérieur de cette zone comporte une partie sombre ou noire mais l'arrière-plan des contours de la paroi du récipient est homogène. Etant étroite, elle crée des ombres épaisses aux parois c'est-à-dire des ombres marquées, contrastées par rapport à l'arrière-plan, très noires et qui s'étendent vers l'intérieur de la silhouette.

Une troisième configuration d'éclairage dite structurée est généralement étendue par rapport à la silhouette du récipient, et son motif d'éclairage est dit structuré ou de type mire. On entend par motif d'éclairage structuré ou mire, une fonction de variation spatiale dans la zone d'éclairage, d'au moins une propriété de la lumière. La propriété variable spatialement est généralement l'intensité lumineuse. Alternativement, la propriété variable spatialement est le spectre de longueurs d'ondes (couleur) ou bien encore une propriété de polarisation telle que la direction de polarisation, le sens de polarisation circulaire ou le degré de polarisation. Selon une autre alternative, la propriété variable spatialement est la forme ou la phase d'une variation temporelle périodique d'une propriété de la lumière telle que son intensité, l'état de polarisation ou le spectre d'émission. Lorsque le motif est non uniforme et donc que la zone d'éclairage présente un motif d'éclairage structuré ou mire, la variation peut être de tout type telle une pente, un triangle, un échelon, une succession de pentes, continue, discontinue, cyclique ou non, rapide ou lente, verticale ou oblique, etc.. De préférence, on utilise généralement une mire à variation périodique. La fonction de variation spatiale peut être bidirectionnelle comme lorsque le motif d'éclairage structuré ou la mire prend la forme d'un damier. La distribution spatiale des intensités lumineuses générées présente des variations assez rapides de manière à contraster les défauts qui dévient la lumière, donc les défauts réfractant qui transmettront une lumière avec la propriété variable différente de celle transmise par leur voisinage.

L'homme du métier reconnaîtra que selon l'invention une zone d'éclairage peut présenter n'importe quelle configuration d'éclairage, dimension, distribution d'intensité ou variation de toute propriété de la lumière pour différentes méthodes de détection à partir de différents types d'images obtenues.

Selon une variante de réalisation, les zones d'éclairage présentent :
- en tant que première configuration d'éclairage identique, la configuration dite étendue à motif homogène adapté. Cette première configuration d'éclairage est adaptée pour notamment détecter les défauts d'aspect absorbant ou réfractant ou dits de stress ;
- en tant que deuxième configuration d'éclairage identique, la configuration dite restreinte homogène. La zone d'éclairement lumineuse est uniforme à l'intérieur d'un contour fermé de largeur angulaire inférieure de 40% à la largeur angulaire de la première configuration identique, en considérant que l'intérieur de cette zone peut comporter une partie sombre mais avec l'arrière-plan des contours de la paroi du récipient qui est homogène. Cette configuration d'éclairage qui présente une largeur d'éclairage réduite par rapport à la première configuration, est adaptée particulièrement pour un contrôle dimensionnel des récipients en produisant des ombres adaptées sur les images à l'endroit des contours des récipients;
- en tant que troisième configuration d'éclairage identique, la configuration dite structurée. Cette troisième configuration d'éclairage est adaptée en particulier pour détecter les défauts réfractant tels que des plis, des bulles ou des reliefs comme des gravures de décor, des ergots de positionnement ou des codes d'identification.

Par configuration d'éclairage identique, il doit être compris que toutes les zones d'éclairage S11, S12, S13 et S21, S22, S23 présentent un motif d'éclairement identique. En d'autres termes, chaque récipient 1 défilant dans les postes d'inspection I1, I2 est éclairé de la même manière pour lesdites prises d'images, au moins une fois par ce motif d'éclairement.

Le dispositif d'inspection comporte un système de commande 10 permettant de piloter en allumage/extinction, les sources lumineuses élémentaires. Le système de commande 10 de tous types connus en soi, pilote les sources lumineuses élémentaires afin qu'elles délivrent une quantité de lumière pendant la prise des images. Ainsi, selon l'exemple de réalisation, ce système de commande 10 pilote les sources élémentaires primaires Sf par la durée d'allumage et/ou le courant et/ou la tension et/ou un rapport cyclique et/ou une fréquence de modulation et/ou un déphasage temporel. Comme expliqué ci-dessus, ce système de commande 10 pilote les sources lumineuses élémentaires de manière à définir pour chaque surface émettrice S1, S2, au moins trois zones d'éclairage présentant au moins une première configuration d'éclairage identique.

Conformément à une autre caractéristique de l'invention, le premier poste d'inspection I1 comporte au moins trois capteurs d'images C11, C12, C13 disposés selon le deuxième côté de la trajectoire opposé au premier côté dans lequel est positionnée la première source de lumière L1. Les capteurs d'images C11, C12, C13 sont des systèmes optiques d'acquisition d'images comportant chacun une caméra de tous les types connus en soi et au moins un objectif avec un centre optique. Classiquement, chaque capteur d'images C11, C12, C13 possède un axe optique respectivement A11, A12, A13, un centre optique O un champ total d'observation, et une distance de travail W entre le centre optique O et le plan de mise au point. Les trois capteurs d'images C11, C12, C13 sont disposés avec des axes optiques de directions différentes selon le deuxième côté de la trajectoire opposé au premier côté, pour prendre des images des récipients entrant dans leur champ total d'observation au cours du déplacement des récipients.

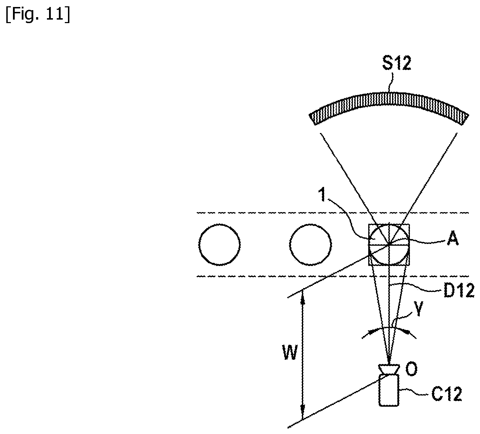

Bien que la mise au point puisse être faite sur la face avant des récipients, généralement, le plan de mise au point est tel que les deux côtés du récipient sont nets sur les images, et le plan de mise au point correspond à peu près à l'axe central A des récipients. Dans la suite de la description, on définit la distance de travail W comme la distance entre le centre optique O du capteur d'images et l'axe central A du récipient au moment de l'acquisition d'image, comme cela est illustré à la figure 11.

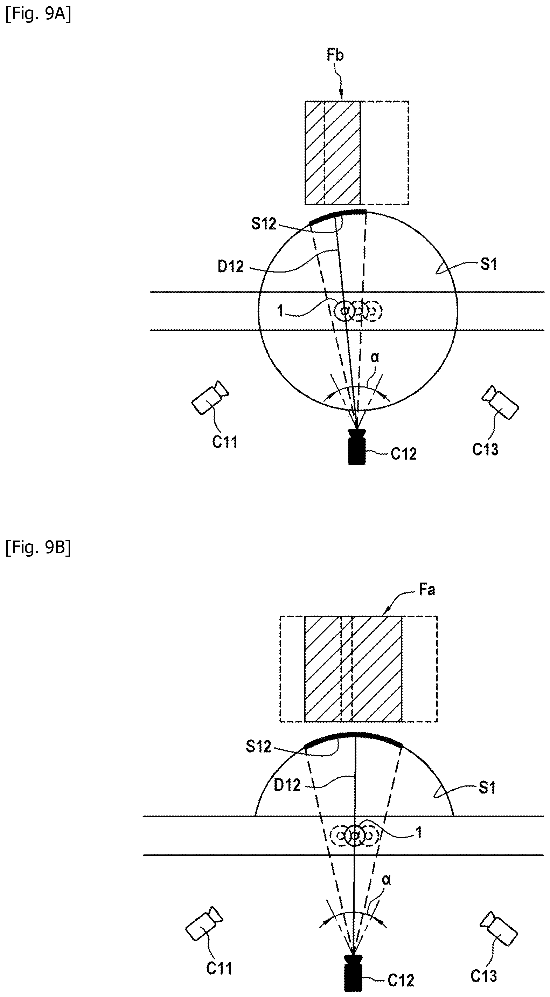

L'image acquise comprend une image entière ou partielle du récipient. Cette image correspond à un champ utile d'observation. L'image acquise peut éventuellement mais pas nécessairement avoir la dimension maximale permise par le capteur optoélectronique et la focale de l'objectif. Donc le champ utile d'observation peut couvrir le champ total d'observation. Le champ total de chaque camera est donc supérieur ou égal au champ utile d'observation. Les figures 9A, 9B, 9C montrent le champ total d'observation de la caméra C12 comme compris dans un angle de champ total α. On observe que le champ utile est quelconque pourvu qu'il permette de réaliser l'image du récipient ou d'une partie du récipient à inspecter. Ainsi il serait possible que le champ utile soit à chaque fois égal au champ total. Il est alternativement possible que les capteurs d'images ne transmettent que des images numériques couvrant un champ utile minimum pour réduire la quantité de données transmises à l'unité de calcul informatique.

Lors d'une acquisition d'image d'un récipient présent dans son champ total d'observation, chaque capteur d'images C11, C12, C13 présente une direction d'observation D11, D12, D13, passant par le centre optique O et l'axe central A du récipient 1. Cette direction d'observation correspond ainsi au segment de droite reliant le centre optique O de l'objectif de la caméra à l'axe central A du récipient 1, projeté dans le plan horizontal d'axes X et Y. Chaque capteur d'images C11, C12, C13 présente un angle d'observation δ déterminé correspondant à l'angle de la direction d'observation D11, D12, D13 par rapport à la direction de défilement F projeté sur le plan horizontal d'axes X et Y. La distance de travail W de chaque capteur d'images est la longueur du segment reliant le centre optique O de l'objectif de la caméra à l'axe central A du récipient 1.

Dans la présente description, pour des raisons de clarté de l'exposé, les directions d'observation des capteurs d'images sont projetées dans le plan horizontal d'axes X et Y car on ne s'intéresse pas à l'angle des directions d'observation par rapport au plan de convoyage Pc, c'est-à-dire que les capteurs d'images peuvent observer les récipients ou présenter des directions d'observation, indifféremment en plongée et en contre-plongée pour l'invention. De même, il est défini les angles d'inter direction β entre deux directions d'observation dans le plan horizontal d'axes X et Y. Par convention, l'angle d'observation δ est l'angle mesuré dans le plan horizontal d'axes X et Y selon le sens trigonométrique, d'une direction d'observation par rapport à la direction de défilement F c'est-à-dire correspond à l'angle entre l'axe X et le segment de la droite horizontale reliant le centre optique de l'objectif de la caméra à l'axe central A du récipient 1. De même les distances de travail des capteurs d'images peuvent être considérées dans le plan horizontal d'axes X et Y.

Par ailleurs, les directions d'observation D11, D12, D13 pour les au moins trois capteurs d'images du premier poste d'inspection I1 sont des droites différentes entre elles avec un angle deux à deux d'inter direction β, et adaptées pour récupérer la lumière issue d'une zone d'éclairage S11, S12, S13 associée. En d'autres termes, chaque capteur d'images C11, C12, C13 du premier poste d'inspection I1 est adapté pour récupérer la lumière issue d'une zone d'éclairage associée respectivement S11, S12, S13, comme cela apparait clairement aux figures 3A à 3C. Ainsi, chaque capteur d'images C11, C12, C13 et chaque zone d'éclairage associée respectivement S11, S12, S13 sont adaptés deux à deux au moment des acquisitions d'images selon les directions d'observation D11, D12, D13.

Conformément à une autre caractéristique de l'invention, le deuxième poste d'inspection I2 comporte au moins trois capteurs d'images C21, C22, C23 disposés selon le premier côté de la trajectoire opposé au deuxième côté dans lequel est positionnée la deuxième source de lumière L2. Les capteurs d'images C21, C22, C23 sont des systèmes optiques d'acquisition d'images comportant chacun une caméra de tous les types connus en soi et au moins un objectif avec un centre optique O. Classiquement, chaque capteur d'images C21, C22, C23 du deuxième poste d'inspection possède un axe optique respectivement A21, A22, A23, un centre optique O, un champ total d'observation et une distance de travail W entre le centre optique O et le plan de mise au point. Les trois capteurs d'images C21, C22, C23 sont disposés avec des axes optiques de directions différentes, selon le premier côté de la trajectoire opposé au deuxième côté, pour prendre des images des récipients entrant dans leur champ total d'observation au cours du déplacement des récipients.

Comme indiqué précédemment, la distance de travail W est la distance entre le centre optique O du capteur d'images et l'axe central A du récipient au moment de l'acquisition d'image. De même, le champ total d'observation d'une caméra est compris dans un angle de champ total α. Le champ total de chaque camera est supérieur ou égal au champ utile d'observation permettant de réaliser l'image du récipient ou d'une partie du récipient à inspecter.

Lors d'une acquisition d'image d'un récipient présent dans son champ total d'observation, chaque capteur d'images C21, C22, C23 présente une direction d'observation D21, D22, D23, passant par le centre optique O et l'axe central A du récipient 1. Cette direction d'observation correspond ainsi au segment de droite reliant le centre optique O de l'objectif de la caméra et l'axe central A du récipient 1, projeté dans le plan horizontal d'axes X et Y. Chaque capteur d'images C21, C22, C23 présente un angle d'observation δ déterminé correspondant à l'angle de la direction d'observation D21, D22, D23 par rapport à la direction de défilement F projeté sur le plan horizontal d'axes X et Y. La distance de travail W de chaque capteur d'images est la longueur du segment reliant le centre optique O de l'objectif à l'axe central A du récipient 1.

Par ailleurs, les directions d'observation D21, D22, D23 pour les au moins trois capteurs d'images du deuxième poste d'inspection I2 sont des droites différentes entre elles avec un angle deux à deux d'inter direction β et adaptées pour récupérer la lumière issue d'une zone d'éclairage S21, S22, S23 associée. En d'autres termes, chaque capteur d'images C21, C22, C23 du deuxième poste d'inspection I2 est adapté pour récupérer la lumière issue d'une zone d'éclairage associée respectivement S21, S22, S23. Ainsi, chaque capteur d'images C21, C22, C23 et chaque zone d'éclairage associée respectivement S21, S22, S23 sont adaptés deux à deux au moment des acquisitions d'images selon les directions d'observation D21, D22, D23.

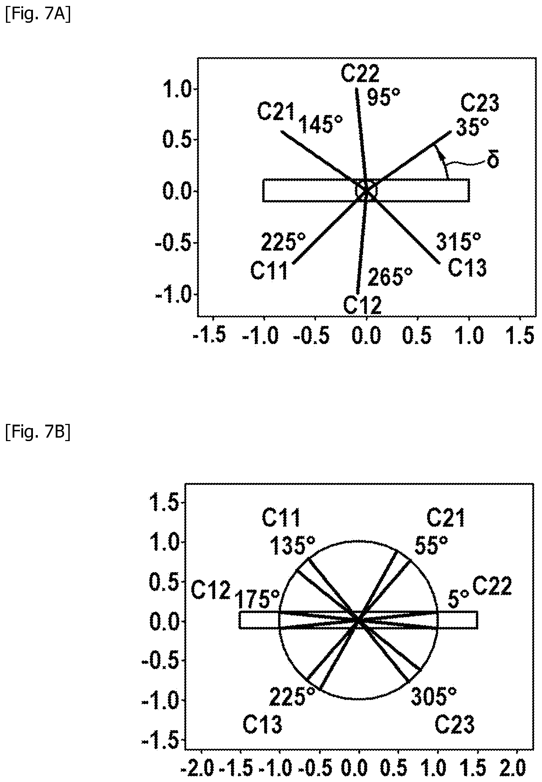

Selon une variante de réalisation, les au moins trois capteurs d'images C11, C12, C13 du premier poste d'inspection I1 et les au moins trois capteurs d'images C21, C22, C23 du deuxième poste d'inspection I2 présentent au moins six directions d'observation D11, D12, D13, D21, D22, D23 écartées entre elles deux à deux d'au moins 10°. Il doit être compris que sur les deux postes d'inspection, les directions d'observation des capteurs d'images sont toutes différentes en valeur d'angle par rapport à la trajectoire F de direction X. Il est ainsi possible de disposer pour chaque récipient, d'au moins six images selon six directions d'observations différentes, ce qui est particulièrement avantageux pour la mesure des diamètres et de l'ovalisation d'une section du récipient. Selon une variante de réalisation illustrée à la figure 7A, les six directions d'observation D11, D12, D13, D21, D22, D23 présentent les valeurs suivantes d'angle d'observation δ: 35°, 95°, 145°, 225°, 265°, 315°.

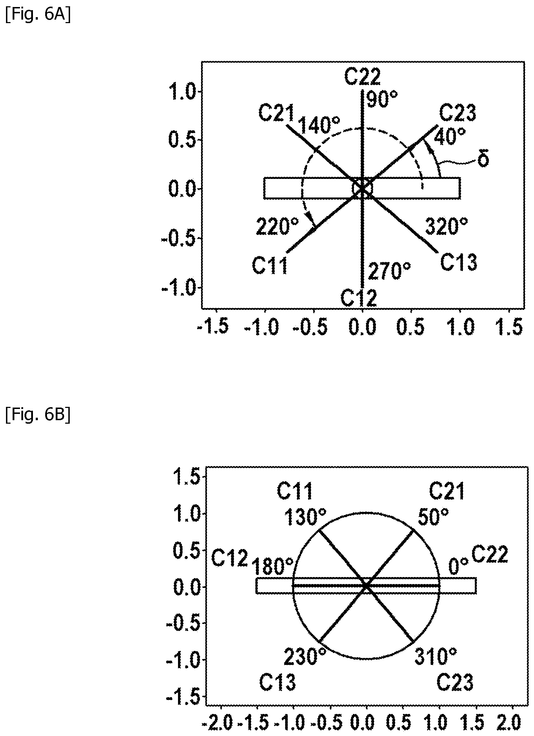

Selon une autre variante de réalisation, les au moins trois capteurs d'images C11, C12, C13 du premier poste d'inspection I1 présentent des directions d'observation écartées entre elles deux à deux d'au moins 30° degrés d'angle β et de préférence d'au moins 40° d'angle β tandis que les au moins trois capteurs d'images C21, C22, C23 du deuxième poste d'inspection I2 présentent des directions d'observation écartées entre elles deux à deux d'au moins 30 degrés d'angle β et de préférence d'au moins 40° d'angle β. Typiquement, dans l'exemple illustré à la figure 6A, les directions d'observation D11, D12, D13, D21, D22, D23 présentent les valeurs suivantes : 40°, 90°, 140°, 220°, 270°, 320°. Ainsi, dans chaque poste d'inspection, les capteurs d'images présentent des directions d'observation voisines écartées entre elles deux à deux d'un d'angle β de 50°.

Les capteurs d'images C11, C12, C13 du premier poste d'inspection I1 et les capteurs d'images C21, C22, C23 du deuxième poste d'inspection I2 sont pilotés par le système de commande 10 pour prendre des images des récipients 1 lors de leur déplacement en translation devant les postes d'inspection. A cet effet, le système de commande 10 est configuré pour, lorsqu'un récipient 1 en déplacement se trouve successivement sensiblement centré sur une direction d'observation D11, D12, D13, D21, D22, D23 de chacun des capteurs d'images C11, C12, C13, C21, C22, C23, acquérir par chacun desdits capteurs d'images, au moins une image du récipient illuminé par la zone d'éclairage associée S11, S12, S13, S21, S22, S23 commandée en allumage successivement pendant l'acquisition et présentant au moins la première configuration d'éclairage.

Conformément à une caractéristique de l'invention, les sources lumineuses élémentaires des zones d'éclairage S11, S12, S13, S21, S22, S23 sont commandées par le système de commande 10 de manière que :
- les au moins trois zones d'éclairage de chaque poste d'inspection associées aux capteurs d'images présentent des largeurs angulaires identiques ;
- les au moins trois zones d'éclairage S11, S12, S13; S21, S22, S23 de chaque poste d'inspection I1, I2 associées aux capteurs d'images s'étendent avec une largeur angulaire L11, L12, L13 ; L21, L22, L23 symétrique par rapport à la direction d'observation correspondante D11, D12, D13, D21, D22, D23;
- et au moins deux zones d'éclairage angulairement voisines S11-S12 ; S12-S13 ; S21-S22 ; S22-S23 de chaque poste d'inspection, possèdent une partie commune d'éclairage S112 S113 S212 S213 en considérant que les deux dites zones d'éclairage ne sont pas éclairées simultanément.

Il ressort de la description qui précède que le dispositif I conforme à l'invention permet de mettre en œuvre un procédé pour inspecter en ligne des récipients 1 vides en verre, en vue d'assurer un contrôle qualité de ces récipients. Un tel procédé vise à mettre à disposition un premier poste d'inspection I1 tel que décrit ci-dessus et, avantageusement un deuxième poste d'inspection I2 décrit ci-dessus. Les récipients 1 sont amenés par le système de transport II, à défiler successivement devant chacun des capteurs d'images des deux postes d'inspection. Ainsi, l'axe central A de chaque récipient 1 est amené à couper successivement, les directions d'observation de chaque capteur d'images.

Tel que cela ressort plus précisément de la figure 3A, lorsqu'un récipient 1 arrive dans une position où il se trouve sensiblement centré sur la direction d'observation D11 du premier capteur d'images C11 et positionné selon la trajectoire, le dispositif de commande 10 pilote d'une part, en allumage selon au moins une première configuration d'éclairage, les sources lumineuses élémentaires de la zone d'éclairage S11 associée au premier capteur d'images C11 et d'autre part, le premier capteur d'images C11 de manière à acquérir par ce premier capteur d'images C11, au moins une image du récipient illuminé par la zone d'éclairage associée S11. Dans ce cas, le champ utile d'observation contient le récipient ou au moins une portion du récipient à inspecter. Conformément à l'invention, les sources lumineuses élémentaires de la zone d'éclairage S11 sont commandées de manière que la zone d'éclairage S11 présente une largeur angulaire L11 identique aux autres largeurs angulaires des zones d'éclairage des postes d'inspection qui seront commandées en allumage pour éclairer le récipient passant devant les autres capteurs d'images. Ainsi, chaque récipient 1 est illuminé de manière identique pour l'ensemble des images prises par les capteurs d'images des postes d'inspection.

Conformément à l'invention, les sources lumineuses élémentaires de la zone d'éclairage S11 sont commandées également de manière que la zone d'éclairage S11 associée au premier capteur d'images C11 s'étende avec une largeur angulaire L11 symétrique par rapport à la direction d'observation D11 de ce premier capteur d'images C11. Autrement dit comme représenté à la figure 3A, la largeur angulaire L11 est partagée par la direction d'observation en deux secteurs angulaires égaux. Il peut ainsi être obtenu une même largeur des ombres sur les bords droit et gauche des images des récipients apparaissant sur les images prises. Le rapport entre la largeur angulaire L11 et le diamètre apparent de la bouteille est à déterminer selon les récipients à inspecter, le type de contrôle etc.. De plus, le champ utile d'observation peut inclure ou non le bord de la zone d'éclairage.

Conformément à l'invention, les sources lumineuses élémentaires commandées pour produire la zone d'éclairage S11 sont commandées également pour produire la zone d'éclairage angulairement voisine à savoir la zone d'éclairage S12 de manière que la zone d'éclairage S12 possède une partie commune d'éclairage S112 avec la zone d'éclairage S11, en considérant que les deux dites zones d'éclairage S11, S12 ne sont pas éclairées simultanément. En d'autres termes, les sources lumineuses élémentaires de cette partie commune d'éclairage S112 qui sont commandées en allumage lors de la prise d'image par le premier capteur d'images C11 seront également commandées en allumage lors de la prise d'image par le deuxième capteur d'images C12. Le recouvrement entre les zones d'éclairage adjacentes permet de gagner en encombrement tout en garantissant les mêmes conditions d'éclairage lors des prises de vues. Typiquement, la largeur angulaire de la partie commune d'éclairage S112 est comprise par exemple entre 8° et 24°.

Lorsque le récipient 1 arrive dans une position où il se trouve sensiblement centré sur la direction d'observation D12, du deuxième capteur d'images C12 positionné selon la trajectoire (figure 3B), le dispositif de commande 10 pilote d'une part, en allumage selon au moins la première configuration d'éclairage, les sources élémentaires de la zone d'éclairage S12 associée au deuxième capteur d'images C12 et d'autre part, le deuxième capteur d'images C12 de manière à acquérir par ce deuxième capteur d'images C12, au moins une image du récipient illuminé par la zone d'éclairage associée S12. Conformément à l'invention, les sources lumineuses élémentaires de la zone d'éclairage S12 sont commandées de manière que la zone d'éclairage S12 présente une largeur angulaire L12 identique à la largeur angulaire de la zone d'éclairage S11 associée au premier capteur d'images C11.

Conformément à l'invention, les sources lumineuses élémentaires de la zone d'éclairage S12 sont commandées également de manière que la zone d'éclairage S12 associée au deuxième capteur d'images C12 s'étende avec une largeur angulaire L12 symétrique par rapport à la direction d'observation D12 de ce deuxième capteur d'images C12. Ainsi comme représenté à la figure 3B, la largeur angulaire L11 est partagée par la direction d'observation en deux secteurs angulaires égaux.

Conformément à l'invention, les sources lumineuses élémentaires de la zone d'éclairage S12 sont commandées également de manière que cette zone d'éclairage S12 et la zone d'éclairage angulairement voisine à savoir la zone d'éclairage S11 possèdent une partie commune d'éclairage S112 comme expliqué précédemment. Ainsi, les sources lumineuses élémentaires de cette partie commune d'éclairage S112 sont commandées en allumage en même temps que les autres sources élémentaires formant le reste de la zone d'éclairage S12.

Lorsque le récipient 1 arrive dans une position où il se trouve sensiblement centré sur la direction d'observation D13 du troisième capteur d'images C13 positionné selon la trajectoire (figure 3C), le dispositif de commande 10 pilote d'une part, en allumage selon au moins la première configuration d'éclairage, les sources élémentaires de la zone d'éclairage S13 associée au troisième capteur d'images C13 et d'autre part, le troisième capteur d'images C13 de manière à acquérir par ce troisième capteur d'images C13, au moins une image du récipient illuminé par la zone d'éclairage associée S13. Conformément à l'invention, les sources lumineuses élémentaires de la zone d'éclairage S13 sont commandées de manière que la zone d'éclairage S13 présente une largeur angulaire L13 identique à la largeur angulaire des autres zones d'éclairage S11, S12 associées aux autres capteurs d'images.

Conformément à l'invention, les sources lumineuses élémentaires de la zone d'éclairage S13 sont commandées également de manière que la zone d'éclairage S13 associée au troisième capteur d'images C13 s'étende avec une largeur angulaire L13 symétrique par rapport à la direction d'observation D13 de ce troisième capteur d'images C13. Ainsi comme représenté à la figure 3C, la largeur angulaire L13 est partagée par la direction d'observation en deux secteurs angulaires égaux.

Conformément à l'invention, les sources lumineuses élémentaires de la zone d'éclairage S13 sont commandées également de manière que cette zone d'éclairage S13 et la zone d'éclairage angulairement voisine à savoir la zone d'éclairage S12 possèdent une partie commune d'éclairage S113 comme expliqué précédemment.

Le recouvrement entre les zones d'éclairage adjacentes Sij et Sij+1 permet si besoin d'installer un capteur d'images Cij' (avec i le numéro du poste d'inspection et j le numéro du capteur d'images) ayant une direction d'observation Dij' comprise entre les directions d'observation Dij et Di j+1 d'un capteur d'images Cij et du capteur d'images Cij+1 voisin, et de commander les sources lumineuses élémentaires pour produire une zone d'éclairage Sij' en chevauchement des zones d'éclairage Sij et Sij+1. Du fait de la continuité des surfaces émettrice S1 S2, la zone d'éclairage Sij' peut présenter au moins une configuration uniforme et une largeur angulaire égales à celle des zones d'éclairage Sij et Sij+1. Cet avantage est encore plus visible en considérant l'unicité du diffuseur qui renforce la continuité et l'uniformité spatiales d'éclairage des surfaces émettrice S1, S2.

Le procédé d'inspection a été décrit en détail pour un récipient 1 déplacé dans le premier poste d'inspection I1. Bien entendu, le procédé d'inspection conforme à l'invention est mis en œuvre de la même manière lorsque le récipient 1 défile dans le deuxième poste d'inspection I2. Ainsi, les sources lumineuses élémentaires des zones d'éclairage S21, S22, S23 sont commandées de manière que les au moins trois zones d'éclairage S21, S22, S23 associées aux capteurs d'image C21, C22, C23 présentent des largeurs angulaires identiques et s'étendent avec une largeur angulaire symétrique par rapport à la direction d'observation correspondante D21, D22, D23 de chaque capteur d'images, en considérant qu'au moins deux zones d'éclairage angulairement voisines S21-S22 ; S22-S23, possèdent une partie commune d'éclairage S212 , S213 avec la condition que les deux dites zones d'éclairage commune S212 , S213 ne sont pas éclairées simultanément. Le procédé d'inspection en relation de ce deuxième poste d'inspection n'est pas décrit plus précisément car il découle directement de la description qui précède. Il s'ensuit que les images de chaque récipient 1 sont prises dans des conditions d'éclairage identiques quelles que soient les directions d'observation des capteurs d'images. En effet les récipients reçoivent la lumière sous les mêmes angles d'éclairage.

Selon une caractéristique avantageuse, le procédé vise à réaliser une analyse des images prises pour chaque récipient, avec les images obtenues des différents capteurs Cij avec les zones d'éclairage associées Sij aux acquisitions et aux différentes directions d'observation Dij présentant une même configuration des zones d'éclairage. Une telle analyse des images prises pour chaque récipient permet de déduire des informations sur les dimensions des récipients et/ou sur les singularités optiques. Dans l'exemple illustré sur les dessins, le procédé permet de disposer pour chaque récipient, de six images prises avec les capteurs d'images présentant une même configuration des zones d'éclairage.

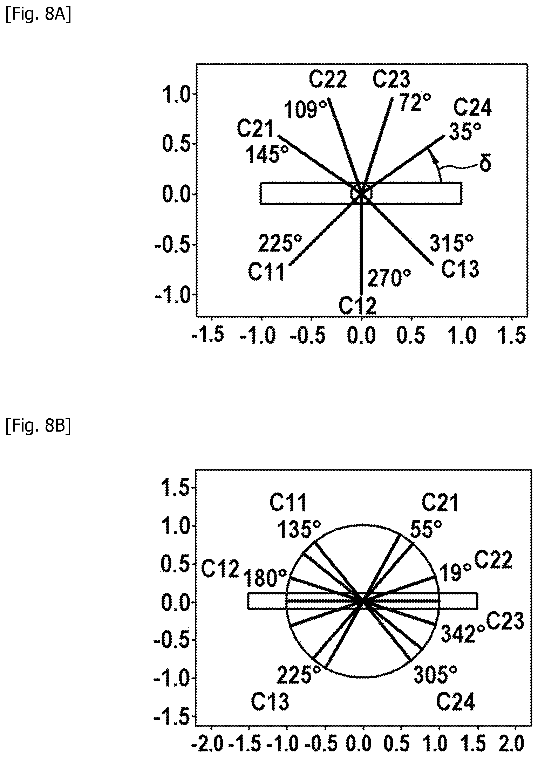

Bien entendu, le procédé peut être mis en œuvre de manière à augmenter le nombre de prises d'images pour chacun des récipients défilant dans les postes d'inspection I1, I2. Une solution consiste à ajouter dans le premier poste d'inspection I1 et /ou le deuxième poste d'inspection I2, un ou plusieurs capteurs d'images permettant d'augmenter le nombre de directions d'observation, comme illustré notamment par l'exemple de réalisation illustré à la figure 8A comportant sept capteurs d'images.

Une autre solution consiste sans changement des sources de lumière L1, L2, à augmenter en nombre les directions d'observation des capteurs d'images en adaptant uniquement la commande de la première source de lumière et/ou de deuxième source de lumière afin que chacune d'entre elles présente plusieurs zones d'éclairage avec au moins une première configuration d'éclairage. Le système de commande 10 pilote ainsi les sources lumineuses élémentaires de la première source de lumière et/ou de la deuxième source de lumière afin de créer plusieurs zones d'éclairage avec au moins une première configuration d'éclairage. En plus de l'augmentation du nombre des directions d'observation des capteurs d'images, le procédé peut également modifier en valeurs d'angle par rapport à la direction de déplacement, les directions d'observation des capteurs d'images. Cette modification des valeurs d'angle des directions d'observation est réalisable en adaptant uniquement la commande. Bien entendu, cette modification des valeurs d'angle des directions d'observation peut être réalisée sans modification du nombre des directions des capteurs d'images. Alternativement, il est possible de déplacer les capteurs d'images ou de modifier la direction de leurs axes optiques en ne modifiant pour l'éclairage que les modalités de commande.

Pour augmenter le nombre de prise de vues, il peut être prévu qu'au moins un capteur d'images acquiert au moins deux images de chaque récipient selon au moins deux directions d'observation différentes suite au déplacement du récipient dans le champ total d'observation du capteur d'images.

Dans les différentes variantes de réalisation décrites ci-dessus pour augmenter le nombre de prises de vues, les zones d'éclairage présentent une seule et même configuration dite première. Bien entendu, les zones d'éclairage peuvent présenter plusieurs configurations d'éclairage en fonction du type de contrôle ou d'observation souhaité, comme déjà expliqué.

Selon une variante de réalisation, le procédé prévoit dans chaque poste d'inspection I1, I2 pour chaque récipient inspecté en défilement:
- de mettre à disposition pour la surface émettrice S1, S2 de chaque source de lumière L1, L2, au moins trois zones d'éclairage S11, S12, S13- S21, S22, S23 présentant au moins la première configuration d'éclairage identique, une deuxième configuration d'éclairage identique et une troisième configuration d'éclairage identique ;
- et lorsque le récipient 1 est sensiblement centré sur une direction d'observation D11, D12, D13, D21, D22, D23 d'un capteur d'images, d'acquérir par chacun desdits capteurs d'images, successivement au moins une image du récipient illuminé par la zone d'éclairage associée, présentant la première configuration d'éclairage, au moins une image du récipient illuminé par la zone d'éclairage associée présentant la deuxième configuration d'éclairage et au moins une image du récipient illuminé par la zone d'éclairage associée, présentant la troisième configuration d'éclairage.

Ainsi, pour une telle variante de réalisation, il est possible de disposer pour chaque récipient 1, d'au moins six images selon au moins six directions d'observation différentes, permettant l'inspection de toute la périphérie de chaque récipient, pour chacune des trois configurations d'éclairage différentes afin de réaliser plusieurs types d'inspection, soit au moins 18 images en tout. L'objet de l'invention permet ainsi de contrôler diverses caractéristiques des récipients lors d'un seul passage dans les postes d'inspection, avec la possibilité de mettre en évidence des caractéristiques et/ou des défauts, en fonction de la configuration d'éclairage utilisée.

Selon un exemple avantageux de mise en œuvre, les au moins trois zones d'éclairage S11, S12, S13- S21, S22, S23 présentent :
- en tant que première configuration d'éclairage identique Fb, une zone d'éclairement lumineuse uniforme à l'intérieur d'un contour fermé ;
- en tant que deuxième configuration d'éclairage identique Fa, une zone d'éclairement lumineuse uniforme à l'intérieur d'un contour fermé de largeur angulaire inférieure de 40 % à la largeur angulaire de la première configuration identique ;
- en tant que troisième configuration d'éclairage identique Fc, une variation d'intensité, de couleur ou de polarisation entre des zones superposées parallèles au plan de convoyage Pc .

Dans cet exemple, les au moins trois zones d'éclairage S11, S12, S13- S21, S22, S23 sont chacune associées respectivement aux capteurs d'images C11, C12, C13-C21 C22 C23 et centrées sur leurs directions d'observation D11, D12, D13, D21, D22, D23, et présentent chacune successivement au moins une première, une deuxième et une troisième configuration d'éclairage. On considère ainsi que la direction d'observation ne change pas entre les acquisitions successives d'images d'un récipient par un même capteur d'image. Ceci est une simplification de fonctionnement qui est acceptable car le déplacement réel est faible entre ces acquisitions si bien que l'on obtient la condition de centrage de la zone éclairée sur la direction d'observation du capteur d'image associé, supposée fixe.

Selon une variante de l'invention, on considère que lorsque le capteur d'images C12 acquiert trois images d'un même récipient défilant dans le poste d'inspection I1, avec une zone d'éclairage associée S12 centrée sur la direction d'observation D12 présentant trois configurations d'éclairage Fa, Fb Fc modifiée à chaque acquisition, la direction d'observation D12 change en vertu du déplacement du récipient, comme on le voit entre les figures 9A, 9B puis 9C. Il est alors avantageux que la zone d'éclairage S12 se déplace pour rester centrée sur la direction d'observation qui varie. Autrement dit, il pourrait être considéré que chaque capteur d'images C12 acquiert trois images selon trois directions d'observation D12 différentes en coopérant avec trois zones d'éclairage S12 associées avec les trois directions d'observation.

Le déplacement étant faible entre deux acquisitions, les zones d'éclairage successivement activées pour un récipient, associées aux acquisitions par un capteur d'images donné, se chevauchent mais sont décalées. Ce décalage est intéressant lorsque le déplacement calculé de l'intersection de la direction d'observation avec la surface émettrice entre deux acquisitions successives est supérieur au plus petit décalage possible de la zone d'éclairage qui correspond à la largeur d'une source lumineuse élémentaire. Ainsi, pour des récipients défilants à la vitesse de 1m/s avec des acquisitions espacées de 1ms, le déplacement entre deux acquisitions par un même capteur d'images est de l'ordre du millimètre. Donc si la largeur des sources lumineuses élémentaires est nettement supérieure au millimètre, il n'est pas intéressant de prévoir ce décalage et la zone reste fixe, autrement dit les configurations successives associées à un même capteur d'images se superposent sans décalage, étant toutes centrées sur la direction d'observation d'un capteur d'images. Ceci étant dit, le décalage et chevauchement entre des zones d'éclairage associées à des capteurs d'images différents reste nécessaire pour permettre la réduction de l'encombrement des postes d'inspection.

Ainsi le procédé prévoit dans chaque poste d'inspection I1 - I2 pour chaque récipient inspecté en défilement :
- de mettre à disposition pour la surface émettrice S1 - S2 de chaque source de lumière L1, L2, au moins neuf zones d'éclairage présentant au moins
- la première configuration d'éclairage identique, une deuxième configuration d'éclairage identique et une troisième configuration d'éclairage,
- et lorsque le récipient 1 est sensiblement centré sur une direction d'observation d'un capteur d'images C11, C12, C13, C21, C22, C23, d'acquérir par chacun desdits capteurs d'images, successivement au moins une image du récipient illuminé par une zone d'éclairage associée, présentant la première configuration d'éclairage, au moins une image du récipient illuminé par une zone d'éclairage associée présentant la deuxième configuration d'éclairage et au moins une image du récipient illuminé par une zone d'éclairage associée, présentant la troisième configuration d'éclairage.

Selon une caractéristique avantageuse de l'invention, les distances de travail W des au moins trois capteurs d'images C11, C12, C13 du premier poste I1 sont sensiblement identiques pour une même configuration d'éclairage. On entend par sensiblement identique, que leurs écarts relatifs sont inférieurs à 10%.

Selon une caractéristique avantageuse de l'invention, les au moins trois capteurs d'images C21, C22, C23 du deuxième poste d'inspection possèdent des distances de travail W sensiblement identiques.

Autrement dit, selon une variante préférée, l'invention consiste à mettre à disposition dans un poste d'inspection I1, I2 au moins trois capteurs d'images C11, C12, C13 - C21, C22, C23, ayant tous une distance de travail W identique au moment de l'acquisition des images selon une même configuration d'éclairage.

Selon une autre variante de l'invention, les au moins trois capteurs d'images C21, C22, C23 du deuxième poste d'inspection possèdent des distances de travail W identiques aux distances de travail des au moins trois capteurs d'images C11, C12, C13 du premier poste d'inspection. En d'autres termes, tous les capteurs d'images C11, C12, C13 et C21, C22, C23 des deux postes d'inspection possèdent des distances de travail W sensiblement identiques.

Autrement dit, selon une autre variante préférée, l'invention consiste à mettre à disposition dans un premier poste d'inspection I1 au moins trois capteurs d'images C11, C12, C13 et dans un deuxième poste d'inspection I2 au moins trois capteurs d'images C21, C22, C23, ayant tous une distance de travail W sensiblement identique au moment de l'acquisition des images selon une même configuration d'éclairage.

De préférence, afin que les distances de travail W soient sensiblement identiques au moment de l'acquisition des images selon une même configuration d'éclairage, le dispositif est conçu de manière que les distances prises le long de l'axe optique entre les centres optiques O des capteurs C11, C12, C13 et C21, C22, C23 et la trajectoire F des récipients sont identiques.

Il ressort de la description qui précède que l'objet de l'invention présente l'avantage de présenter une ou plusieurs sources de lumière dont la surface émettrice est homogène et continue, permettant un grand choix des directions d'observation des capteurs d'images, sous des angles quelconques.

Le procédé selon l'invention permet d'améliorer la détection de l'aspect des récipients en équilibrant les ombres de chaque côté du récipient, ce qui améliore les performances de détection comme cela apparait à la figure 5A en comparaison des prises de vues de la figure 5B réalisées avec une source émettrice plane parallèle à la trajectoire.

Le procédé selon l'invention permet d'améliorer la détection de l'aspect des récipients en révélant avec le même contraste, un défaut de type par exemple bouillon lorsqu'il est positionné au centre du récipient, sur les vues dites centrales avec la direction d'observation placées au niveau sensiblement du plan de symétrie des sources de lumière mais également sur les vues dites latérales avec les directions d'observation écartées de part et d'autre du plan de symétrie des sources de lumière. Cela est dû d'une part à la courbure de la surface émettrice S1, S2 des sources de lumière qui maintient quasiment constante la distance entre la surface émettrice et le récipient, d'autre part à la symétrie de la zone d'éclairage par rapport à la direction d'observation, ce qui contraste ainsi de la même manière un défaut quels que soient les capteurs d'images qui l'observent.

La détection des défauts restant identique quelle que soit l'orientation du récipient passant dans les postes d'inspection, le procédé selon l'invention permet une répétitivité d'inspection en offrant l'acquisition d'images identiques quelle que soit l'orientation du récipient et la direction d'observation en faisant en sorte que les au moins six images de chaque configuration (contrôle d'aspect ou contrôle dimensionnel ou contrôle stress ou à motif d'éclairage) soient identiques entre elles. Le procédé permet d'obtenir le même rendu d'image, quelle que soit l'angle de prise de vue du capteur d'images autour du récipient.

Cette répétitivité est accrue dans la variante de l'invention selon laquelle les distances de travail W des capteurs d'images sont sensiblement identiques. En effet, cette distance de travail W étant identique, les angles γ des rayons issus du récipient par rapport à la direction d'observation sont les mêmes pour les différentes images (figure 11). Si bien que le contraste apparent des défauts notamment ceux réfractant la lumière, ainsi que les ombres aux bords des récipients, sont les mêmes car les chemins optiques depuis la source S1 S2 aux capteurs d'images Cij sont similaires pour les différentes images acquises par les différents capteurs d'images, pour une configuration donnée d'éclairage.

Par ailleurs, le procédé selon l'invention offre l'avantage de pouvoir mesurer autant de diamètres différents que le nombre de capteurs d'images dans un encombrement réduit, lorsque les capteurs d'images présentent des directions d'observation toutes différentes entre elles. Ainsi, le procédé permet de réaliser l'analyse des six images prises par les au moins six capteurs d'images à au moins une hauteur donnée dans les images parcourues du bas du récipient vers le haut, pour déterminer la distance entre deux bords opposés du récipient. Une telle distance permet d'en déduire une mesure de diamètre en mm du récipient à ladite hauteur du récipient. Il est ainsi possible de déterminer des informations sur les dimensions des récipients et en particulier la conformité dimensionnelle du récipient à partir des mesures d'au moins six diamètres différents selon six directions d'observation différentes comparées à des seuils de tolérances de diamètre ou des seuils de non circularité pour au moins une hauteur donnée du récipient.

Selon une variante de réalisation illustrée à la figure 7A, le premier poste d'inspection I1 comporte trois capteurs d'images C11, C12, C13 présentant des directions d'observation avec un angle d'observation δ mesuré dans le sens trigonométrique par rapport à la direction de défilement respectivement de 35°, 95° et 145° , et le deuxième poste d'inspection I2 comporte trois capteurs d'images présentant des directions d'observation avec un angle d'observation δ mesuré dans le sens trigonométrique respectivement 225°, 265° et 315° par rapport à la direction de défilement. On constate que les directions d'observation sont des droites ayant toutes au moins 10° d'angle entre elles deux à deux. Sur la Figure 7B sont représentés pour une coupe d'un récipient supposé cylindrique, les diamètres vus par les six capteurs d'images respectifs et l'on constate donc que six diamètres différents sont mesurés (5°, 55°, 135°, 175°, 225°, 305°), ce qui garantit une amélioration de la mesure des ovalisations ou des « non ronds » c'est-à-dire des récipients dont la circonférence normalement ronde est non ronde, présentant souvent un méplat localement. Les figures 6A et 6B présentent par opposition une machine telle que les deux postes d'inspection I1 I2 comportent chacun comme selon l'art antérieur des capteurs d'images disposées symétriquement par rapport au convoyeur, donc avec seulement trois diamètres différents mesurés. L'erreur moyenne sur la mesure d'ovalisation est supérieure dans l'exemple de réalisation illustré aux figures 6A, 6B par rapport à l'exemple illustré aux figures 7A et 7B. Ce raisonnement considère la visée télé centrique, mais il s'applique motus mutandis dans le cas courant de capteurs d'images à optiques non télé centriques mais de longues focales.

Selon l'invention, il est possible grâce à la surface émettrice courbe, de disposer n'importe quel nombre de capteurs d'images avec n'importe quelle direction d'observation, excepté dans l'axe du convoyeur. Ainsi selon la figure 8A, sept capteurs d'images sont disposés avec leurs directions d'observation réparties angulairement de manière que comme illustré à la figure 8B, sept diamètres différents sont mesurés. Là encore, la précision de mesurer des ovalisations et des récipients non ronds est améliorée par rapport à une disposition symétrique d'un nombre pair de capteurs d'images comme l'art antérieur le propose.

## Revendications

1. Procédé d'inspection pour des récipients (1) déplacés selon un plan de convoyage (Pc) avec une trajectoire rectiligne, le procédé consistant dans un premier poste d'inspection (I1):
- à mettre à disposition une première source de lumière (L1) éclairant les récipients selon un premier côté de la trajectoire, comportant une surface émettrice (S1) présentant un plan de symétrie (P) perpendiculaire à la trajectoire et s'étendant d'une part, en hauteur selon une direction verticale (Z) normale au plan de convoyage et d'autre part, sur une largeur angulaire totale , suivant une courbe concave, la surface émettrice (S1) étant composée d'une pluralité de sources lumineuses élémentaires commandées de manière à définir au moins trois zones d'éclairage (S11, S12, S13) présentant au moins une première configuration d'éclairage identique ;
- à mettre à disposition au moins trois capteurs d'images (C11, C12, C13) avec des champs totaux d'observation et disposés avec des axes optiques de directions différentes selon un deuxième côté de la trajectoire opposé au premier côté, pour présenter chacun, lors d'une acquisition d'image d'un récipient présent dans son champ total d'observation, une direction d'observation (D11, D12, D13), passant par le centre optique et l'axe central du récipient, les directions d'observation pour les au moins trois capteurs d'images étant des droites différentes et adaptées pour récupérer la lumière issue d'une zone d'éclairage associée ;
- et lorsqu'un récipient (1) en déplacement se trouve successivement sensiblement centré sur une direction d'observation (D11, D12, D13) de chacun des capteurs d'images, à acquérir par chacun desdits capteurs d'images, au moins une image du récipient illuminé par la zone d'éclairage associée commandée en allumage successivement pendant l'acquisition, présentant au moins la première configuration d'éclairage, les sources lumineuses élémentaires des zones d'éclairage (S11, S12, S13) étant commandées de manière que :
* les au moins trois zones d'éclairage (S11, S12, S13) associées aux capteurs d'images présentent des largeurs angulaires identiques (L11, L12, L13) ;
* les au moins trois zones d'éclairage (S11, S12, S13) associées aux capteurs d'images s'étendent avec une largeur angulaire (L11, L12, L13) symétrique par rapport à la direction d'observation (D11, D12, D13) correspondante ;
* et au moins deux zones d'éclairage angulairement voisines (S11-S12 ; S12-S13), possèdent une partie commune d'éclairage (S112, S113) en considérant que les deux dites zones d'éclairage ne sont pas éclairées simultanément.

2. Procédé selon la revendication précédente, selon lequel dans un deuxième poste d'inspection (I2) situé en aval du premier poste d'inspection (I1) selon le sens de déplacement des récipients, le procédé consiste :
- à mettre à disposition une deuxième source de lumière (L2) éclairant les récipients selon le deuxième côté de la trajectoire, comportant une surface émettrice (S2) présentant un plan de symétrie (P) perpendiculaire à la trajectoire et s'étendant d'une part, en hauteur selon une direction verticale (Z) normale au plan de convoyage et d'autre part, sur une largeur angulaire totale , suivant une courbe concave, la surface émettrice (S2) étant composée d'une pluralité de sources lumineuses élémentaires commandées de manière à définir au moins trois zones d'éclairage (S21, S22, S23) présentant au moins une première configuration d'éclairage identique ;
- à mettre à disposition au moins trois capteurs d'images (C21, C22, C23) avec des champs totaux d'observation et disposés avec des axes optiques de directions différentes selon le premier côté de la trajectoire, pour présenter chacun, lors d'une acquisition d'image d'un récipient présent dans son champ total d'observation, une direction d'observation (D21, D22, D23) passant par le centre optique et l'axe central du récipient, les directions d'observation pour les au moins trois capteurs d'images étant des droites différentes et adaptées pour récupérer la lumière issue d'une zone d'éclairage associée ;
- et lorsqu'un récipient (1) en déplacement se trouve successivement sensiblement centré sur une direction d'observation de chacun des capteurs d'images, à acquérir par chacun desdits capteurs d'images, au moins une image du récipient illuminé par la zone d'éclairage associée commandée en allumage successivement pendant l'acquisition, présentant au moins la première configuration d'éclairage, les sources lumineuses élémentaires des zones d'éclairage (S21, S22, S23) étant commandées de manière que :
* les au moins trois zones d'éclairage (S21, S22, S23) associées aux capteurs d'images (C21, C22, C23) présentent des largeurs angulaires identiques (L21, L22, L23) ;
* les au moins trois zones d'éclairage (S21, S22, S23) associées aux capteurs d'images s'étendent avec une largeur angulaire (L21, L22, L23) symétrique par rapport à la direction d'observation correspondante (D21, D22, D23) ;
* et au moins deux zones d'éclairage angulairement voisines (S21-S22 ; S22-S23), possèdent une partie commune d'éclairage (S213, S212) en considérant que les deux dites zones d'éclairage ne sont pas éclairées simultanément.

3. Procédé selon l'une des revendications précédentes, selon lequel on met à disposition la première source de lumière (L1) avec une surface émettrice (S1) réalisée par une portion d'un cylindre généralisé engendré par une génératrice réalisée par un segment de droite verticale et une courbe directrice concave selon le plan de convoyage, dont la concavité est tournée vers les récipients.

4. Procédé selon l'une des revendications précédentes, selon lequel on met à disposition la première source de lumière (L1) avec une surface émettrice (S1) avec une largeur angulaire totale entre 100 et 175° et/ou avec une surface émettrice (S1) présentant selon le plan de convoyage, une largeur comprise entre 500 mm et 700 mm et une profondeur comprise entre 100 mm et 350 mm.

5. Procédé selon l'une des revendications précédentes, selon lequel dans le premier poste d'inspection (I1) :
- on met à disposition pour la surface émettrice (S1) de la première source de lumière (L1), au moins trois zones d'éclairage (S11, S12, S13) présentant au moins la première configuration d'éclairage identique, une deuxième configuration d'éclairage identique et une troisième configuration d'éclairage identique ;
- et lorsqu'un récipient (1) est sensiblement centré sur une direction d'observation (D11, D12, D13) d'un capteur d'images, à acquérir par chacun desdits capteurs d'images, successivement au moins une image du récipient illuminé par la zone d'éclairage associée, présentant la première configuration d'éclairage, au moins une image du récipient illuminé par la zone d'éclairage associée, présentant la deuxième configuration d'éclairage et au moins une image du récipient illuminé par la zone d'éclairage associée, présentant la troisième configuration d'éclairage.

6. Procédé selon l'une des revendications précédentes, selon lequel dans le premier poste d'inspection on met à disposition pour la surface émettrice (S1) de la première source de lumière, au moins trois zones d'éclairage (S11, S12, S13) présentant :
- en tant que première configuration d'éclairage identique, une configuration étendue à motif homogène adapté;
- en tant que deuxième configuration d'éclairage identique, une configuration restreinte homogène;
- en tant que troisième configuration d'éclairage identique, une configuration structurée.

7. Procédé selon l'une des revendications 2 à 6, selon lequel on met à disposition au moins trois capteurs d'images (C11, C12, C13) au premier poste d'inspection (I1) et au moins trois capteurs d'images (C21, C22, C23) au second poste d'inspection (I2), lesdits au moins six capteurs d'images présentant au moins six directions d'observation (D11, D12, D13, D21, D22, D23) écartées entre elles deux à deux d'au moins 10°.

8. Procédé selon l'une des revendications 2 à 7, selon lequel, on modifie les directions d'observation (D11, D12, D13, D21, D22, D23) des capteurs d'images en nombre et/ou en valeurs d'angle par rapport à la direction de déplacement en adaptant uniquement la commande de la première source de lumière (L1) et/ou de la deuxième source de lumière (L2) pour présenter au moins trois zones d'éclairage présentant au moins une première configuration d'éclairage.

9. Procédé selon l'une des revendications 2 à 8, selon lequel au moins un capteur d'images (C11, C12, C13, C21, C22, C23) acquiert au moins deux images de chaque récipient selon au moins deux directions d'observation différentes suite au déplacement du récipient dans le champ total d'observation du capteur d'images.

10. Procédé selon l'une des revendications précédentes, selon lequel on réalise une analyse des images prises par les capteurs d'images (C11, C12, C13, C21, C22, C23) avec une même configuration des zones d'éclairage pour en déduire des informations de défauts et/ou de dimensions des récipients.

11. Procédé selon la revendication 7, selon lequel :
- on réalise l'analyse des six images prises par les au moins six capteurs d'images (C11, C12, C13, C21, C22, C23) à au moins une hauteur donnée dans les images parcourues du bas du récipient vers le haut, pour déterminer la distance entre deux bords opposés du récipient pour en déduire une mesure de diamètre du récipient à ladite hauteur,
- on détermine la conformité dimensionnelle du récipient à partir des mesures d'au moins six diamètres différents selon six directions différentes comparées à des seuils de tolérances de diamètre ou des seuils de non circularité pour au moins une hauteur donnée du récipient.

12. Procédé selon l'une des revendications précédentes consistant à mettre à disposition dans un poste d'inspection (I1, I2) au moins trois capteurs d'images (C11, C12, C13 - C21, C22, C23), ayant tous une distance de travail (W) sensiblement identique au moment de l'acquisition des images selon une même configuration d'éclairage.

13. Dispositif d'inspection pour des récipients déplacés selon un plan de convoyage avec une trajectoire rectiligne, ce dispositif d'inspection comportant :
* un premier poste d'inspection (I1) comportant :
- une première source de lumière (L1) selon un premier côté de la trajectoire, comportant une surface émettrice (S1) présentant un plan de symétrie (P1) perpendiculaire à la trajectoire et s'étendant d'une part, en hauteur selon une direction verticale normale au plan de convoyage (Pc) et d'autre part, sur une largeur angulaire totale suivant une courbe concave, la surface émettrice (S1) étant composée d'une pluralité de sources lumineuses élémentaires commandées de manière à définir au moins trois zones d'éclairage (S1, S2, S3) présentant au moins une première configuration d'éclairage identique ;
- au moins trois capteurs d'images (C11, C12, C13) avec des champs totaux d'observation et disposés avec des axes optiques de directions différentes selon un deuxième côté de la trajectoire opposé au premier côté, pour présenter chacun, lors d'une acquisition d'image d'un récipient présent dans son champ total d'observation, une direction d'observation (D11, D12, D13) passant par le centre optique et l'axe central du récipient, les directions d'observation pour les capteurs d'images étant différentes et adaptées pour récupérer la lumière issue d'une zone d'éclairage associée ;
*un deuxième poste d'inspection (I2) situé en aval du premier poste d'inspection selon le sens de déplacement des récipients, ce deuxième poste d'inspection comportant :
- une deuxième source de lumière (L2) selon le deuxième côté de la trajectoire, comportant une surface émettrice (S2) présentant un plan de symétrie (P2) perpendiculaire à la trajectoire et s'étendant d'une part, en hauteur selon une direction verticale normale au plan de convoyage (Pc) et d'autre part, sur une largeur angulaire totale, suivant une courbe concave, la surface émettrice (S2) étant composée d'une pluralité de sources lumineuses élémentaires commandées de manière à définir au moins trois zones d'éclairage (S21, S22, S23) présentant au moins une première configuration d'éclairage identique ;
- au moins trois capteurs d'images (C21, C22, C23) avec des champs totaux d'observation et disposés avec des axes optiques de directions différentes selon le premier côté de la trajectoire, pour présenter chacun, lors d'une acquisition d'image d'un récipient présent dans son champ total d'observation, une direction d'observation (D21, D22, D23) passant par le centre optique et l'axe central du récipient, les directions d'observation pour les capteurs d'images étant adaptées pour récupérer la lumière issue d'une zone d'éclairage associée, les directions d'observation pour les capteurs d'images du deuxième poste d'inspection étant des droites différentes entre elles et différentes des directions d'observation des capteurs d'images du premier poste d'inspection;
* et un système de commande (10) des sources de lumière (L1, L2) et des capteurs d'images (C11, C12, C13, C21, C22, C23), configuré pour, lorsqu'un récipient en déplacement se trouve successivement sensiblement centré sur une direction d'observation (D11, D12, D13, D21, D22, D23), de chacun des capteurs d'images, à acquérir par chacun desdits capteurs d'images, au moins une image du récipient illuminé par la zone d'éclairage associée commandée en allumage successivement pendant l'acquisition, présentant au moins la première configuration d'éclairage, les sources lumineuses élémentaires des zones d'éclairage (S11, S12, S13, S21, S22, S23) étant commandées de manière que :
- les au moins trois zones d'éclairage (S11, S12, S13, S21, S22, S23) de chaque poste d'inspection associées aux capteurs d'images présentent des largeurs angulaires identiques ;
- les au moins trois zones d'éclairage (S11, S12, S13, S21, S22, S23) de chaque poste d'inspection associées aux capteurs d'images s'étendent avec une largeur angulaire symétrique par rapport à la direction d'observation correspondante (D11, D12, D13, D21, D22, D23) ;
- et au moins deux zones d'éclairage angulairement voisines de chaque poste d'inspection, possèdent une partie commune d'éclairage en considérant que les deux dites zones d'éclairage ne sont pas éclairées simultanément.

14. Dispositif d'inspection selon la revendication précédente selon lequel les au moins trois capteurs d'images (C11, C12, C13, C21, C22, C23), de chaque poste d'inspection (I1, I2) présentent des directions d'observation (D11, D12, D13, D21, D22, D23) qui sont des droites écartées entre elles deux à deux d'au moins 30° d'angle et de préférence d'au moins 40° d'angle.

15. Dispositif d'inspection selon l'une des revendications 13 à 14 dans lequel au moins trois capteurs d'images (C11, C12, C13) dans un premier poste d'inspection (I1) et au moins trois capteurs d'images (C21, C22, C23), dans un deuxième poste d'inspection (I2) possèdent tous une distance de travail sensiblement identique prise le long de l'axe optique entre leur centre optique et la trajectoire (F) des récipients.

## Patentansprüche

1. Verfahren zur Inspektion von in einer Förderebene (Pc) bewegten Behältern (1) mit geradlinigem Weg, wobei das Verfahren in einer ersten Inspektionsstation (I1):
- Bereitstellen einer die Behälter entlang einer ersten Seite des Pfades beleuchtenden ersten Lichtquelle (L1), umfassend eine Abstrahlfläche (S1) mit einer zur Bahn senkrechten Symmetrieebene (P), die sich einerseits in einer vertikalen Richtung (Z) senkrecht zur Förderebene (Pc) und andererseits über eine gesamte Winkelbreite nach einer konkaven Kurve erstreckt, wobei die Abstrahlfläche (S1) aus mehreren Elementarlichtquellen zusammengesetzt ist, die so gesteuert sind, dass sie mindestens drei Beleuchtungszonen (S11, S12, S13) mit mindestens einer ersten identischen Beleuchtungskonfiguration definieren;
- Bereitstellen von mindestens drei Bildsensoren (C11, C12, C13) mit gesamten Beobachtungsfeldern und mit optischen Achsen in unterschiedlichen Richtungen entlang einer zweiten Seite des Pfades gegenüber der ersten Seite, um bei einer Bildaufnahme eines in seinem gesamten Beobachtungsfeld vorhandenen Behälters eine Beobachtungsrichtung (D11, D12, D13), die durch die optische Mitte und die Mittelachse des Behälters verläuft, zu haben, wobei die Beobachtungsrichtungen für die mindestens drei Bildsensoren unterschiedliche gerade Linien sind und angepasst sind, um das von einer zugeordneten Beleuchtungszone kommende Licht zurückzugewinnen;
- und wenn sich ein Behälter (1) in Bewegung nacheinander im Wesentlichen zentriert auf einer Beobachtungsrichtung (D11, D12, D13) jedes der Bildsensoren positioniert wird, um mit jedem der Bildsensoren mindestens ein Bild des Behälters aufzunehmen, das von der zugehörigen Beleuchtungszone beleuchtet wird, die während der Aufnahme nacheinander eingeschaltet wird und mindestens die erste Beleuchtungskonfiguration aufweist, wobei die Elementarlichtquellen der Beleuchtungszonen (S11, S12, S13) so gesteuert werden, dass:
* die mindestens drei den Bildsensoren zugeordneten Beleuchtungszonen (S11, S12, S13) identische Winkelbreiten (L11, L12, L13) aufweisen;
* die mindestens drei den Bildsensoren zugeordneten Beleuchtungszonen (S11, S12, S13) sich mit einer symmetrischen Winkelbreite (L11, L12, L13) relativ zur entsprechenden Beobachtungsrichtung (D11, D12, D13) erstrecken;
* und mindestens zwei im Winkel benachbarte Beleuchtungszonen (S11-S12, S12-S13) einen gemeinsamen Beleuchtungsabschnitt (S112; S113) aufweisen, wobei berücksichtigt wird, dass die beiden Beleuchtungszonen nicht gleichzeitig beleuchtet werden.

2. Verfahren nach dem vorhergehenden Anspruch, wobei in einer zweiten Inspektionsstation (I2), die stromabwärts der ersten Inspektionsstation (I1) in der Bewegungsrichtung der Behälter angeordnet ist, das Verfahren umfasst :
- Bereitstellen einer zweiten Lichtquelle (L2), die Behälter entlang der zweiten Seite des Pfades beleuchtet, umfassend eine Abstrahlfläche (S2) mit einer zur Bahn senkrechten Symmetrieebene (P), die sich einerseits in einer vertikalen Richtung (Z) senkrecht zur Förderebene und andererseits über eine gesamte Winkelbreite nach einer konkaven Kurve erstreckt, wobei die Abstrahlfläche (S2) aus mehreren Elementarlichtquellen zusammengesetzt ist, die so gesteuert sind, dass sie mindestens drei Beleuchtungszonen (S21, S22, S23) mit mindestens einer ersten identischen Beleuchtungskonfiguration definieren;
- Bereitstellen von mindestens drei Bildsensoren (C21, C22, C23) mit Gesamtbeobachtungsfeldern und mit optischen Achsen in unterschiedlichen Richtungen entlang der ersten Seite des Pfades, um bei einer Bildaufnahme eines in seinem gesamten Beobachtungsfeld vorhandenen Behälters eine Beobachtungsrichtung (D21, D22, D23), die durch das optische Zentrum und die Mittelachse des Behälters verläuft, zu haben, wobei die Beobachtungsrichtungen (D11, D12, D13) für die mindestens drei Bildsensoren unterschiedliche gerade Linien sind und angepasst sind, um das von einer zugeordneten Beleuchtungszone kommende Licht zurückzugewinnen;
- und wenn sich ein Behälter (1) in Bewegung nacheinander im Wesentlichen zentriert auf einer Beobachtungsrichtung jedes der Bildsensoren befindet, um für jeden der Bildsensoren zumindest ein Bild des von der zugeordneten Beleuchtungszone beleuchteten Behälters nacheinander während der Erfassung zu erfassen, mit zumindest der ersten Beleuchtungskonfiguration, wobei die Elementarlichtquellen der Beleuchtungszonen (S21, S22, S23) derart angesteuert werden, dass :
* die den Bildsensoren (C21, C22, C23) zugeordneten mindestens drei Beleuchtungszonen (S21, S22, S23) gleiche Winkelbreiten (L21, L22, L23) aufweisen );
* die den Bildsensoren zugeordneten mindestens drei Beleuchtungszonen (S21, S22, S23) mit einer symmetrischen Winkelbreite (L21, L22, L23) relativ zu der entsprechenden Beobachtungsrichtung (D21, D22, D23) verlaufen );
* und mindestens zwei winklig benachbarte Beleuchtungszonen (S21 -S22; S22 -S23) einen gemeinsamen Beleuchtungsabschnitt (S213, S212) aufweisen, unter Berücksichtigung, dass die beiden Beleuchtungszonen nicht gleichzeitig beleuchtet werden.

3. Verfahren nach einem der vorhergehenden Ansprüche, wobei die erste Lichtquelle (L1) mit einer Emissionsfläche (S1) versehen ist, die durch einen Abschnitt eines generalisierten Zylinders erzeugt wird, der durch eine Generatrix erzeugt wird, die durch ein Segment einer vertikalen geraden Linie erzeugt wird, und eine konkave Direktrix-Kurve in der Förderebene, deren Konkavität in Richtung der Behälter gedreht wird.

4. Verfahren nach einem der vorhergehenden Ansprüche, wobei die erste Lichtquelle (L1) mit einer Abstrahlfläche (S1) mit einer Gesamtwinkelbreite zwischen 100° und 175° und/oder mit einer Abstrahlfläche (S1) versehen ist, die in der Förderebene eine Breite zwischen 500 mm und 700 mm und eine Tiefe zwischen 100 mm und 350 mm aufweist.

5. Verfahren nach einem der vorhergehenden Ansprüche, wobei in der ersten Inspektionsstation (I1):
- für die Abstrahlfläche (S1) der ersten Lichtquelle (L1) mindestens drei Beleuchtungszonen (S11, S12, S13) vorgesehen sind, die zumindest die erste identische Beleuchtungskonfiguration, eine zweite identische Beleuchtungskonfiguration und eine dritte identische Beleuchtungskonfiguration aufweisen;
- und wenn ein Behälter (1) im Wesentlichen auf einer Beobachtungsrichtung (D11, D12, D13) eines Bildsensors zentriert ist, um für jeden der Bildsensoren nacheinander mindestens ein von der zugeordneten Beleuchtungszone beleuchtetes Bild des Behälters mit der ersten Beleuchtungskonfiguration zu erfassen, wobei mindestens ein von der zugeordneten Beleuchtungszone beleuchtetes Bild des Behälters die zweite Beleuchtungskonfiguration und mindestens ein von der zugeordneten Beleuchtungszone beleuchtetes Bild des Behälters mit der dritten Beleuchtungskonfiguration aufweist.

6. Verfahren nach einem der vorhergehenden Ansprüche, wobei in der ersten Inspektionsstation mindestens drei Beleuchtungszonen (S11, S12, S13) für die Abstrahlfläche (S1) der ersten Lichtquelle vorgesehen sind, mit :
- als erste identische Beleuchtungskonfiguration eine ausgedehnte Konfiguration mit einem geeigneten homogenen Muster;
- als zweite identische Beleuchtungskonfiguration eine eingeschränkte homogene Konfiguration;
- als dritte identische Beleuchtungskonfiguration eine strukturierte Konfiguration.

7. Verfahren nach einem der Ansprüche 2 bis 6, wobei in der ersten Inspektionsstation (I1) mindestens drei Bildsensoren (C11, C12, C13) vorgesehen sind und in der zweiten Inspektionsstation (I2) mindestens drei Bildsensoren (C21, C22, C23) vorgesehen sind, die mindestens sechs Beobachtungsrichtungen (D11, D12, D13, D21, D22, D23) aufweisen, die paarweise um mindestens 10° beabstandet sind.

8. Verfahren nach einem der Ansprüche 2 bis 7, wobei die Anzahl und/oder der Winkelwert der Beobachtungsrichtungen (D11, D12, D13, D21, D22, D23) der Bildsensoren relativ zur Bewegungsrichtung durch nur Einstellen der Steuerung der ersten Lichtquelle (L1) und/oder der zweiten Lichtquelle (L2) modifiziert werden, um mindestens drei Beleuchtungszonen mit mindestens einer ersten Beleuchtungskonfiguration zu haben.

9. Verfahren nach einem der Ansprüche 2 bis 8, wobei mindestens ein Bildsensor (C11, C12, C13, C21, C22, C23) mindestens zwei Bilder jedes Behälters in mindestens zwei verschiedenen Beobachtungsrichtungen erfasst, und zwar nach der Bewegung des Behälters in dem Gesamtbeobachtungsfeld des Bildsensors.

10. Verfahren nach einem der vorhergehenden Ansprüche, wobei eine Analyse der von den Bildsensoren (C11, C12, C13, C21, C22, C23) aufgenommenen Bilder mit derselben Konfiguration der Beleuchtungszonen durchgeführt wird, um Informationen über Defekte und/oder Abmessungen der Behälter abzuleiten.

11. Verfahren nach Anspruch 7, wobei :
- die Analyse der sechs von den mindestens sechs Bildsensoren (C11, C12, C13, C21, C22, C23) aufgenommenen Bilder an mindestens einer gegebenen Höhe in den von dem Boden des Behälters nach oben abgetasteten Bildern durchgeführt wird, um den Abstand zwischen zwei gegenüberliegenden Kanten des Behälters zu bestimmen, um eine Messung des Durchmessers des Behälters auf dieser Höhe abzuleiten,
- die Masshaltigkeit des Behälters anhand der Messungen von mindestens sechs unterschiedlichen Durchmessern in sechs unterschiedlichen Richtungen im Vergleich zu Durchmessertoleranzschwellen oder Nicht-Zirkularitätsschwellen für mindestens eine vorgegebene Höhe des Behälters bestimmt wird.

12. Verfahren nach einem der vorhergehenden Ansprüche, **dadurch gekennzeichnet, dass** in einer Inspektionsstation (I1, I2) mindestens drei Bildsensoren (C11, C12, C13 - C21, C22, C23) mit einem im Wesentlichen identischen Arbeitsabstand (W) zum Zeitpunkt der Erfassung der Bilder mit gleicher Beleuchtungskonfiguration vorgesehen sind.

13. Vorrichtung zur Inspektion von in einer Förderebene bewegten Behältern mit geradlinigem Weg, wobei diese Inspektionsvorrichtung umfasst :
* eine erste Inspektionsstation (I1), umfassend :
- eine erste Lichtquelle (L1) entlang einer ersten Seite des Pfades, umfassend eine Abstrahlfläche (S1) mit einer zur Bahn senkrechten Symmetrieebene (P1), die sich einerseits in einer vertikalen Richtung senkrecht zur Förderebene (Pc) und andererseits über eine Gesamtwinkelbreite nach einer konkaven Kurve erstreckt, wobei die Abstrahlfläche (S1) aus mehreren Elementarlichtquellen zusammengesetzt ist, die so gesteuert sind, dass sie mindestens drei Beleuchtungszonen (S11, S12, S13) mit mindestens einer ersten identischen Beleuchtungskonfiguration definieren;
- mindestens drei Bildsensoren (C11, C12, C13) mit Gesamtbeobachtungsfeldern und mit optischen Achsen in unterschiedlichen Richtungen entlang einer der ersten Seite gegenüberliegenden zweiten Seite des Pfades angeordnet sind, um bei einer Bildaufnahme eines in seinem gesamten Beobachtungsfeld vorhandenen Behälters eine Beobachtungsrichtung (D11, D12, D13), die durch das optische Zentrum und die Mittelachse des Behälters verläuft, zu haben, wobei die Beobachtungsrichtungen für die Bildsensoren unterschiedlich und angepasst sind, um das von einer zugeordneten Beleuchtungszone kommende Licht zurückzugewinnen;
* eine zweite Inspektionsstation (I2), die der ersten Inspektionsstation in Bewegungsrichtung der Behälter nachgeordnet ist, wobei diese zweite Inspektionsstation umfasst :
- eine zweite Lichtquelle (L2) entlang der zweiten Seite des Pfades, umfassend eine Abstrahlfläche (S2) mit einer zur Bahn senkrechten Symmetrieebene (P2), die sich einerseits in einer vertikalen Richtung senkrecht zur Förderebene (Pc) und andererseits über eine Gesamtwinkelbreite nach einer konkaven Kurve erstreckt, wobei die Abstrahlfläche (S2) aus mehreren Elementarlichtquellen zusammengesetzt ist, die so gesteuert sind, dass sie mindestens drei Beleuchtungszonen (S21, S22, S23) mit mindestens einer ersten identischen Beleuchtungskonfiguration definieren;
- mindestens drei Bildsensoren (C21, C22, C23) mit Gesamt-Beobachtungsfeldern und mit optischen Achsen in unterschiedlichen Richtungen entlang der ersten Seite des Pfades angeordnet sind, um bei einer Bildaufnahme eines in seinem gesamten Beobachtungsfeld vorhandenen Behälters eine Beobachtungsrichtung (D21, D22, D23), die durch das optische Zentrum und die Mittelachse des Behälters gelangt, zu erhalten, wobei die Beobachtungsrichtungen für die Bildsensoren zur Rückgewinnung des von einer zugeordneten Beleuchtungszone kommenden Lichts eingestellt werden, wobei die Beobachtungsrichtungen für die Bildsensoren der zweiten Inspektionsstation voneinander verschiedene gerade Linien sind und sich von den Beobachtungsrichtungen der Bildsensoren der ersten Inspektionsstation unterscheiden;
* und ein Steuersystem (10) der Lichtquellen (L1, L2) und der Bildsensoren (C11, C12, C13, C21, C22, C23), die so konfiguriert sind, dass, wenn ein Behälter in Bewegung nacheinander im Wesentlichen auf einer Beobachtungsrichtung (D11, D12, D13, D21, D22, D23) jedes der Bildsensoren zentriert angeordnet ist, die Elementarlichtquellen (S11, S12, S13, S21, S22, S23) der Beleuchtungszonen derart angesteuert werden, dass :
- die mindestens drei Beleuchtungszonen (S11, S12, S13, S21, S22, S23) jeder der Bildsensoren zugeordneten Inspektionsstation identische Winkelbreiten aufweisen;
- die mindestens drei Beleuchtungszonen (S11, S12, S13, S21, S22, S23) jeder der Bildsensoren zugeordneten Inspektionsstation mit einer symmetrischen Winkelbreite relativ zu der entsprechenden Beobachtungsrichtung (D11, D12, D13, D21, D22, D23 );
- und mindestens zwei winklig benachbarte Beleuchtungszonen jeder Inspektionsstation einen gemeinsamen Beleuchtungsabschnitt aufweisen, unter Berücksichtigung, dass die beiden Beleuchtungszonen nicht gleichzeitig beleuchtet werden.

14. Inspektionsvorrichtung nach dem vorhergehenden Anspruch, wobei die mindestens drei Bildsensoren (C11, C12, C13, C21, C22, C23) jeder Inspektionsstation (I1, I2) Beobachtungsrichtungen (D11, D12, D13, D21, D22, D23) aufweisen, die gerade Linien sind, die paarweise um einen Winkel von mindestens 30° und vorzugsweise mindestens 40° beabstandet sind.

15. Inspektionsvorrichtung nach einem der Ansprüche 13 bis 14, wobei mindestens drei Bildsensoren (C11, C12, C13) in einer ersten Inspektionsstation (I1) und mindestens drei Bildsensoren (C21, C22, C23) in einer zweiten Inspektionsstation (I2) jeweils einen im Wesentlichen identischen Arbeitsabstand entlang der optischen Achse zwischen ihrem optischen Zentrum und dem Weg (F) der Behälter aufweisen.

## Claims

1. A method for inspecting containers (1) moved in a conveying plane (Pc) with a rectilinear path, the method comprising in a first inspection station (I1):
- providing a first light source (L1) illuminating the containers along a first side of the path, comprising an emitting surface (S1) having a plane of symmetry (P) perpendicular to the path and extending, on the one hand, in height in a vertical direction (Z) normal to the conveying plane (Pc) and, on the other hand, over a total angular width, following a concave curve, the emitting surface (S1) being composed of a plurality of elementary light sources controlled so as to define at least three illumination zones (S11, S12, S13) having at least one first identical illumination configuration;
- providing at least three image sensors (C11, C12, C13) with total observation fields and disposed with optical axes in different directions along a second side of the path opposite the first side, in order to each have, during an image acquisition of a container present in its total observation field, an observation direction (D11, D12, D13) passing through the optical centre and the central axis of the container, the observation directions for the at least three image sensors being different straight lines and adjusted to recover the light coming from an associated illumination zone;
- and when a container (1) in movement is successively located substantially centred on an observation direction (D11, D12, D13) of each of the image sensors, in order for each of said image sensors to acquire at least one image of the container illuminated by the associated illumination zone controlled to be switched on successively during the acquisition, having at least the first illumination configuration, the elementary light sources of the illumination zones (S11, S12, S13) being controlled in such a way that:
* the at least three illumination zones (S11, S12, S13) associated with the image sensors have identical angular widths (L11, L12, L13);
* the at least three illumination zones (S11, S12, S13) associated with the image sensors extend with a symmetrical angular width (L11, L12, L13) relative to the corresponding observation direction (D11, D12, D13);
* and at least two angularly neighbouring illumination zones (S11-S12, S12-S13), have a common illumination portion (S112; S113) considering that said two illumination zones are not illuminated simultaneously.

2. The method according to the preceding claim, wherein in a second inspection station (I2) located downstream of the first inspection station (I1) in the direction of movement of the containers, the method comprises:
- providing a second light source (L2) illuminating the containers along the second side of the path, comprising an emitting surface (S1) having a plane of symmetry (P) perpendicular to the path and extending, on the one hand, in height in a vertical direction (Z) normal to the conveying plane (Pc) and, on the other hand, over a total angular width, following a concave curve, the emitting surface (S2) being composed of a plurality of elementary light sources controlled so as to define at least three illumination zones (S21, S22, S23) having at least one first identical illumination configuration;
- providing at least three image sensors (S21, S22, S23) with total observation fields and disposed with optical axes in different directions along the first side of the path, in order to each have, during an image acquisition of a container present in its total observation field, an observation direction (D21, D22, D23) passing through the optical centre and the central axis of the container, the observation directions (D11, D12, D13) for the at least three image sensors being different straight lines and adjusted to recover the light coming from an associated illumination zone;
- and when a container (1) in movement is successively located substantially centred on an observation direction (D11, D12, D13) of each of the image sensors, in order for each of said image sensors to acquire at least one image of the container illuminated by the associated illumination zone controlled to be switched on successively during the acquisition, having at least the first illumination configuration, the elementary light sources of the illumination zones (S21, S22, S23) being controlled in such a way that:
* the at least three illumination zones (S21, S22, S23) associated with the image sensors (C21, C22, C23) have identical angular widths (L21, L22, L23);
* the at least three illumination zones (S21, S22, S23) associated with the image sensors extend with a symmetrical angular width (L21, L22, L23) relative to the corresponding observation direction (D21, D22, D23);
* and at least two angularly neighbouring illumination zones (S21-S22; S22-S23), have a common illumination portion (S213, S212) considering that said two illumination zones are not illuminated simultaneously.

3. The method according to one of the preceding claims, wherein the first light source (L1) is provided with an emitting surface (S1) produced by a portion of a generalised cylinder created by a generatrix produced by a segment of vertical straight line and a concave directrix curve in the conveying plane, the concavity of which is turned towards the containers.

4. The method according to one of the preceding claims, wherein the first light source (L1) is provided with an emitting surface (S1) with a total angular width between 10° and 175° and/or with an emitting surface (S1) having, in the conveying plane, a width between 500 mm and 700 mm and a depth between 100 mm and 350 mm.

5. The method according to one of the preceding claims, wherein in the first inspection station (I1):
- at least three illumination zones (S11, S12, S13) are provided for the emitting surface (S1) of the first light source (L1), having at least the first identical illumination configuration, a second identical illumination configuration and a third identical illumination configuration;
- and when a container (1) is substantially centred on an observation direction (D11, D12, D13) of an image sensor, in order for each of said image sensors to successively acquire at least one image of the container illuminated by the associated illumination zone, having the first illumination configuration, at least one image of the container illuminated by the associated illumination zone, having the second illumination configuration and at least one image of the container illuminated by the associated illumination zone, having the third illumination configuration.

6. The method according to one of the preceding claims, wherein in the first inspection station at least three illumination zones (S11, S12, S13) are provided for the emitting surface (S1) of the first light source (L1), having:
- as a first identical illumination configuration, an extended configuration with suitable homogeneous pattern;
- as a second identical illumination configuration, a restricted homogeneous configuration;
- as a third identical illumination configuration, a structured configuration.

7. The method according to any one of claims 2 to 6, wherein at least three image sensors (C11, C12, C13) are provided in the first inspection station (I1) and at least three image sensors (C21, C22, C23) are provided in the second inspection station (I2), said at least six image sensors having at least six observation directions (D11, D12, D13, D21, D22, D23) spaced apart in pairs by at least 10°.

8. The method according to any one of claims 2 to 7, wherein, the number and/or angular value of the observation directions (D11, D12, D13, D21, D22, D23) of the image sensors relative to the direction of movement are modified by only adjusting the control of the first light source (L1), and/or of the second light source (L2), in order to have at least three illumination zones having at least one first illumination configuration.

9. The method according to any one of claims 2 to 8, wherein at least one image sensor (C11, C12, C13, C21, C22, C23) acquires at least two images of each container in at least two different observation directions, following the movement of the container in the total observation field of the image sensor.

10. The method according to one of the preceding claims, wherein an analysis of the images taken by the image sensors (C11, C12, C13, C21, C22, C23) with the same configuration of the illumination zones is carried out in order to derive information concerning defects and/or dimensions of the containers.

11. The method according to claim 7, wherein:
- the analysis of the six images taken by the at least six image sensors (C11, C12, C13, C21, C22, C23) is carried out at at least one given height in the images scanned from the bottom of the container to the top, in order to determine the distance between two opposite edges of the container, in order to derive a measurement of the diameter of the container at said height,
- the dimensional conformity of the container is determined on the basis of the measurements of at least six different diameters in six different directions compared with diameter tolerance thresholds or non-circularity thresholds for at least one given height of the container.

12. The method according to one of the preceding claims consisting in providing, in one inspection station (I1, I2), at least three image sensors (C11, C12, C13, C21, C22, C23), having a substantially identical working distance (W) at the time of acquisition of the images with a same illumination configuration.

13. A device for inspecting containers moved in a conveying plane (Pc) with a rectilinear path, this inspection device comprising:
* a first inspection station (I1) comprising:
- a first light source (L1) along a first side of the path, comprising an emitting surface (S1) having a plane of symmetry (P1) perpendicular to the path and extending, on the one hand, in height in a vertical direction normal to the conveying plane (Pc) and, on the other hand, over a total angular width following a concave curve, the emitting surface (S1) being composed of a plurality of elementary light sources controlled so as to define at least three illumination zones (S11, S12, S13) having at least one first identical illumination configuration;
- at least three image sensors (C11, C12, C13) with total observation fields and disposed with optical axes in different directions along a second side of the path opposite the first side, in order to each have, during an image acquisition of a container present in its total observation field, an observation direction (D11, D12, D13) passing through the optical centre and the central axis of the container, the observation directions for the image sensors being different and adjusted to recover the light coming from an associated illumination zone;
* a second inspection station (I2) located downstream of the first inspection station in the direction of movement of the containers, this second inspection station comprising:
- a second light source (L2) along the second side of the path, comprising an emitting surface (S2) having a plane of symmetry (P2) perpendicular to the path and extending, on the one hand, in height in a vertical direction normal to the conveying plane (Pc) and, on the other hand, over a total angular width following a concave curve, the emitting surface (S2) being composed of a plurality of elementary light sources controlled so as to define at least three illumination zones (S21, S22, S23) having at least one first identical illumination configuration;
- at least three image sensors (C21, C22, C23) with total observation fields and disposed with optical axes in different directions along the first side of the path, in order to each have, during an image acquisition of a container present in its total observation field, an observation direction (D21, D22, D23) passing through the optical centre and the central axis of the container, the observation directions for the image sensors being adjusted to recover the light coming from an associated illumination zone, the observation directions for the image sensors of the second inspection station being mutually different straight lines and different from the observation directions of the image sensors of the first inspection station;
* and a control system (10) of the light sources (L1, L2) and the image sensors (C11, C12, C13, C21, C22, C23) configured so that when a container in movement is successively located substantially centred on an observation direction (D11, D12, D13, D21, D22, D23) of each of the image sensors, in order for each of said image sensors to acquire at least one image of the container illuminated by the associated illumination zone controlled to be switched on successively during the acquisition, having at least the first illumination configuration, the elementary light sources (S11, S12, S13, S21, S22, S23) of the illumination zones being controlled in such a way that:
- the at least three illumination zones (S11, S12, S13, S21, S22, S23) of each inspection station associated with the image sensors have identical angular widths;
- the at least three illumination zones (S11, S12, S13, S21, S22, S23) of each inspection station associated with the image sensors extend with a symmetric angular width relative to the corresponding observation direction (D11, D12, D13, D21, D22, D23);
- and at least two angularly neighbouring illumination zones of each inspection station, have a common illumination portion considering that said two illumination zones are not simultaneously illuminated.

14. The inspection device according to the preceding claim, wherein the at least three image sensors (C11, C12, C13, C21, C22, C23) of each inspection station (I1, I2) have observation directions (D11, D12, D13, D21, D22, D23) which are straight lines spaced apart in pairs by an angle of at least 30° and preferably at least 40°.

15. The inspection device according to one claims 13 to 14, wherein at least three image sensors (C11, C12, C13) in a first inspection station (I1) and at least three image sensors (C21, C22, C23) in a second inspection station (I2) each have a substantially identical working distance taken along the optical axis between their optical centre and the path (F) of the containers.
